Europäisches Patentamt

European Patent Office

Office européen des brevets

(19)

(11) Veröffentlichungsnummer: **0 338 079**

**A1**

(12) **EUROPÄISCHE PATENTANMELDUNG**

Veröffentlicht nach Art. 158 Abs. 3 EPÜ

(21) Anmeldenummer: **88907453.0**

(22) Anmeldetag: **26.05.88**

Daten der zugrundeliegenden internationalen Anmeldung:

(86) Internationale Anmeldenummer:
**PCT/SU88/00122**

(87) Internationale Veröffentlichungsnummer:
**WO89/03973 (05.05.89 89/10)**

(51) Int. Cl.³: **G 01 B 15/00**
**G 01 B 11/26**

(30) Priorität: **30.10.87 SU 4319014**

(43) Veröffentlichungstag der Anmeldung:
**25.10.89 Patentblatt 89/43**

(84) Benannte Vertragsstaaten:
**AT DE FR GB IT NL SE**

(71) Anmelder: **TSENTRALNY
NAUCHNO-ISSLEDOVATELSKY
GEOLOGORAZVEDOCHNY INSTITUT TSVETNYKH I
BLAGORODNYKH METALLOV (TSNIGRI)**
**Varshavskoe shosse, 129b**
**Moscow, 113545(SU)**

(72) Erfinder: **MIKHEEV, Sergei Mikhailovich**
**ul. Zelenodolskaya, 17-5-72**
**Moscow, 109457(SU)**

(72) Erfinder: **ZEMEROV, Valery Nikolaevich**
**pr. Vernadskogo, 67-16**
**Moscow, 117415(SU)**

(72) Erfinder: **ELSHANSKY, Petr Vasilievich**
**Volzhsky bulvar, 6-1-17**
**Moscow, 109518(SU)**

(74) Vertreter: **Nix, Frank Arnold, Dr.**
**Kröckelbergstrasse 15**
**D-6200 Wiesbaden(DE)**

(54) **VERFAHREN ZUR REGELUNG DER BESCHAFFENHEIT EINES LANGEN BAUELEMENTES.**

(57) Das Verfahren zur Kontrolle des Zustands einer langgestreckten Konstruktion (1) besteht in der Anordnung und Befestigung einer langen Wellenenergieübertragungsleitung (5) auf der Oberfläche dieser Konstruktion längs wenigstens dreier Mantellinien. Anhand der gemessenen Krümmung der Mantellinien bestimmt man die Krümmung und die Torsion der Achse (6) der Konstruktion (1), die Koordinaten der gewählten Punkte und die mechanischen Kennwerte.

Die Einrichtung für die Durchführung des Verfahrens enthält eine Quelle (4) modulierter Wellenenergie, ein Raumfilter (8), eine lange Wellenenergieübertragungsleitung (5), ein Raumfilter (12), eine Einheit (7) zur analogen Informationsverarbeitung, einen ADW (26), einen Mikroprozessor (27), ein Videoterminal (16).

FIG3

# VERFAHREN UND EINRICHTUNG ZUR KONTROLLE DES
# ZUSTANDS EINER LANGGESTRECKTEN KONSTRUKTION

## Gebiet der Technik

Die Erfindung bezieht sich auf die Kontroll- und Meßtechnik, insbesondere auf Verfahren und Einrichtungen zur Kontrolle des Zustands einer langgestreckten Konstruktion. Unter langgestreckten Konstruktionen werden Konstruktionen verstanden, bei denen das Quermaß wesentlich (um Größenordnungen) kleiner als die Länge ist und die Oberfläche in Richtung der Längsachse eine Zylinderform aufweist. Als Kontrollkonstruktionen kommen beispielsweise Seile, Kabel, elektrische Übertragungsleitungen, flexible Schläuche, Rohrleitungen, wassersperrende Seebohrsäulen, Maste zur Elektroenergie- und Funkübertragung, Fundamente und Säulen von Bauwerken in Betracht.

## Stand der Technik

Es ist ein Verfahren zur Kontrolle des Zustands einer langgestreckten Konstruktion bekannt, das zur Kontrolle der Geometrie einer wassersperrenden Bohrsäule beim Offshore-Bohren realisiert wurde (AEG-Telefunken, BRD, "Position measuring system for Offshore Installations", System design and mathematical description, 1980, 10 p.). Das bekannte Verfahren besteht darin, daß man einen Sensor wählt, der auf eine Änderung des zu kontrollierenden Parameters, nämlich der Geometrie der Oberfläche der langgestreckten Konstruktion, reagiert, welche den Zustand dieser Konstruktion charakterisiert, dann eine lange Wellenenergieübertragungsleitung gewählt wird, die Informationen über eine Änderung des zu kontrollierenden Parameters trägt, der gewählte Sensor und die gewählte Wellenenergieübertragungsleitung aneinander gekoppelt und in der Kontrollzone nach der vorgegebenen Koordinate angeordnet werden, in deren Richtung sich der zu kontrollierende Parameter ändert, welcher den Zustand der langgestreckten Konstruktion charakterisiert, worauf ein in der Zeit moduliertes Bezugssignal erzeugt und dem Eingang der langen Wellenenergieübertragungsleitung zugeführt wird, wobei dieses Signal bei seiner Fortpflanzung auf dieser Leitung entsprechend der Änderung des zu kontrollierenden und den Zustand der langgestreckten Konstruktion charakterisierenden Parameters umgeformt wird, und nun die Parameter des umgeformten Bezugssignals am Ausgang der langen Wellenenergieübertragungsleitung gemessen werden, wobei man nach den gemessenen Parametern des umgeformten Bezugssignals mechanische Kennwerte des Zustandes der langgestreckten Konstruktion längs der vorgegebenen Koordinate bestimmt, in deren Richtung sich der zu kontrollierende Parameter ändert. Konkreter werden die Operationen des bekannten Verfahrens in der Version der Firma AEG-Telefunken wie folgt realisiert.

Beim bekannten Verfahren werden als Kontrollparameter zur Bewertung des Zustands einer langgestreckten Konstruktion - einer wassersperrenden Säule - die Winkelabweichung der Säulenachse von der Vertikalen und die Torsionswinkel des oberen und des unteren Teiles der wassersperrenden Säule benutzt. Darum erfolgt die Wahl von Sensoren auf dem Wege der Entwicklung von speziellen Gebern, die auf Änderungen dieser Winkel reagieren, nämlich von Inertialinklinometern und Magnetkompassen. Dann wird eine lange Wellenenergieübertragungsleitung in der Art eines abgeschirmten elektrischen Kabels mit einer Polyäthylen-Schutzhülle gewählt. Die gewählten Geber und das Kabel werden induktiv aneinander gekoppelt und auf der Oberfläche in Richtung der Achse der wassersperrenden Säule angeordnet. Um eine ausreichende Informationsmenge über die Geometrie der Längsachse in einem dreidimensionalen Raum zu erhalten, werden die Geber zur Erfassung der Abweichungen dieser Achse von der Vertikalen auf der Oberfläche der Säule in zwei orthogonalen Mantellinien angeordnet und befestigt. Dann wird auf den Kabeleingang ein elektrisches Bezugssignal gegeben, das sich in der Zeit mit einer Frequenz von 400 Hz ändert. Bei der Fortpflanzung dieses Signals über das Kabel erfolgen mittels induktiver Kopplung die Speisung der Geber und der Empfang einer Information über die Winkel von ihnen, jedoch auf einer gegenüber der Trägerfrequenz von 400 Hz höheren Frequenz. Am Kabelausgang werden die Parameter des umgeformten elektrischen Bezugssignals gemessen, diese Information wird dekodiert, und auf Grund der Daten über die Torsionswinkel und Winkel der Abweichung der Längsachse der Säule von der Vertikalen ermittelt man mechanische Kennwerte des Säulenzustands. Die ermittelten Kennwerte bestimmen eindeutig den gespannten und verformten Zustand der wassersperrenden Säule und die gegenseitige Lage ihrer äußersten Punkte für eine dynamische Positionierung.

Es ist eine Einrichtung zur Kontrolle des Zustands einer langgestreckten Konstruktion, beispielsweise einer wassersperrenden Säule beim Offshore-Bohren (AEG-Telefunken, BRD, Position measuring system for Offshore Installations", System design and mathematical description, 1980, 10 p.) bekannt, die eine zur Erzeugung eines zeitlich veränderlichen Bezugssignals bestimmte Quelle modulierter Wellenenergie, eine lange Wellenenergieübertragungsleitung, die in der Zone der Kontrolle der langgestreckten Konstruktion längs der vorgegebenen Koordinate verlegt, zur Erfassung und Übertragung von Informationen über Änderungen des zu kontrollierenden Parameters bestimmt und an den Ausgang der Quelle der modulierten Wellenenergie gekoppelt ist, und eine mit der langen Wellenenergieübertragungsleitung verbundene Informationsverarbeitungseinheit, die zur Auskopplung des von der langen Wellenenergieübertragungsleitung umgeformten Bezugssignals aus dieser Leitung und zur Ermittlung der mechanischen Kennwerte des Zustands der langgestreckten Konstruktion bestimmt ist, ein Videoterminal enthält, welches zur Abbildung der erhaltenen mechanischen Kennwerte vorgesehen und dessen Eingang an den Ausgang der Informationsverarbeitungseinheit angeschlossen ist.

Als Quelle der modulierten Wellenenergie wird in der bekannten Einrichtung ein 400-Hz-Elektroenergieerzeuger benutzt. Das elektrische Kabel dient zugleich der Speisung der auf der Oberfläche der wassersperrenden Säule angeordneten Geber sowie der Informationserfassung und -übertragung. Deswegen ist das Kabel längs der gesamten wassersperrenden Säule verlegt, und die inneren Kabeladern sind an den Erzeuger und an eine Quelle zeitlich modulierter Hochfrequenzschwingungen (von 33...42 kHz) angeschlossen, die für ein Abfragen der Geber benötigt werden. Mit dem Kabel ist auch die Informationsverarbeitungseinheit als Zentralstation verbunden, welche die Geberinformation vom Kabelausgang auskoppelt und in eine für die Verarbeitung geeignete Form umwandelt. Die in dieser Station verarbeiteten Informationen werden in Form von Kennwerten der Geometrie der Längsachse der wassersperrenden Säule auf dem Videoterminal (hier grafisches Display) dargestellt.

Für das bekannte Verfahren und die bekannte Einrichtung zur Kontrolle des Zustands von langgestreckten Konstruktionen sind folgende Einschränkungen besonders charakteristisch.

Nach dem genannten Verfahren und mit der bekannten Einrichtung lassen sich die langgestreckten Konstruktionen mit hoher Auflösung und auf großen Entfernungen von der Konstruktion infolge eingeschränkter Aussagefähigkeit der langen Wellenenergieübertragungsleitung, sinkender Sicherheit der Informationsübertragung bei größer werdender Leitungslänge und infolge dementsprechend zunehmender Störungen und Spannungsverluste in dieser Leitung nicht kontrollieren. Die Benutzung von diskret einstellbaren Sensoren in Form von Winkelgebern gibt grundsätzlich keine Möglichkeit, die Verteilung des zu kontrollierenden Parameters kontinuierlich zu messen.

Möglich ist nur eine Approximation der Parameterverteilung nach den längs der vorgegebenen Koordinate diskret erhaltenen Meßwerten, hier nach denen der Winkel der Abweichung der Längsachse der wassersperrenden Säule von der Vertikalen. Somit ist die Kontrolle der räumlich und zeitlich kontinuerlichen mechanischen Kennwerte der langgestreckten Konstruktion, nämlich der Krümmung und Torsion der Längsachse solch einer Säule, grundsätzlich nicht möglich, da sie mit Approximationsfehlern behaftet ist. Außerdem sinkt die Gesamtgenauigkeit der Kontrolle auch noch wegen beträchtlicher Meßfehler der Geber selbst.

Die Vereinigung des Sensors mit der langen Wellenenergieübertragungsleitung auf elektromechanischem Wege unter Benutzung der induktiven Kopplung und eine spezielle Befestigung des Sensors auf der Leitung zwingt zur Installation von in ihrer Wirkungsweise verschiedenen Gebern und zur Organisation einer recht komplizierten Abfrageprozedur für sie, was die Herstellung und das Betreiben von aufwendigen elektronischen Unterwassergeräten mit niedriger Zuverlässigkeit erforderlich macht.

Außerdem haben die benutzten Winkelgeber zur Erfassung der Abweichung der Säulenachse von der Vertikalen einen beschränkten dynamischen Änderungsbereich für den zu kontrollierenden Winkel (von höchstens 10°) und lassen somit keine Kontrolle der wassersperrenden Säulen bei deren starken Verformungen zu. Es erscheint als nicht möglich, mit Hilfe ein und desselben bekannten Verfahrens und der dieses Verfahren durchführenden Einrichtung andere Arten von langgestreckten Konstruktionen zu kontrollieren und das Auflösungsvermögen der Messungen und der Kontrolle zu erhöhen, ohne die Anzahl der Geber zu vergrößern und den Abstand zwischen ihnen zu verringern. Bei der Durchführung der Kontrolle des Zustands einer langgestreckten Konstruktion verbraucht die Einrichtung eine Leistung von ca. 2 kW.

Nach dem technischen Wesen liegt der angemeldeten technischen Lösung ein Verfahren zur Kontrolle des Zustands eines langgestreckten Objekts, nämlich einer Konstruktion (PCT/SU 88/00082), am nächsten, das darin besteht, daß man eine lange Wellenenergieübertragungsleitung wählt, die eine Fortpflanzung von Signalen in Form von Moden mit bekannter räumlich-zeitlicher Struktur physikalischer Felder gewährleistet, die gewählte lange Wellenenergieübertragungsleitung auf der Oberfläche längs der Längsachse der langgestreckten Konstruktion in Richtung der vorgegebenen Koordinate S anordnet, auf der langen Wellenenergieübertragungsleitung mindestens einen Bezugssignalkanal und mindestens einen Meßkanal mit bekannten Verzögerungen von Phasengeschwindigkeiten der Moden in jedem dieser Kanäle auswählt, eine gerichtete Wechselwirkung von Feldern der Moden mindestens eines Bezugssignalkanals und mindestens eines Meßkanals entlang der langen Wellenenergieübertragungsleitung in Abhängigkeit von der Änderung der Geometrie der Oberfläche der langgestreckten Konstruktion sichert, um im Meßkanal ein Signal zu erzeugen, das sich im Vorgang der Ausbreitung des Signals über den Bezugssignalkanal entsprechend der Änderung der Geometrie der Oberfläche der langgestreckten Konstruktion ändert, die den Zustand dieser Konstruktion charakterisiert, ein zeitlich moduliertes Signal in Form von Schwingungen physikalischer Felder bildet und diese Schwingungen in ein Signal mit vorgegebener räumlich-zeitlicher Struktur von Feldern der Moden umwandelt, die Felder der Moden an den Ausgängen mindestens eines Bezugssignal- und mindestens eines Meßkanals der langen Wellenenergieübertragungsleitung in nur von der Zeit abhängige elektrische Signale umsetzt, die Amplitude des elektrischen Signals am Ausgang des Bezugssignalkanals abtrennt, das elektrische Signal am Ausgang des Meßkanals umgekehrt proportional zum Amplitudenwert des elektrischen Signals am Ausgang des Bezugssignalkanals verstärkt, eine lineare Skalierung verwendet, die die Größe der Differenz der Verzögerung der Phasengeschwindigkeiten der Moden des Bezugssignal- und des Meßkanals der langen Wellenenergieübertragungsleitung in Verbindung mit der laufenden Zeit der Kontrolle und dem Meßwert der vorgegebenen Koordinate S entlang der langen Wellenenergieübertragungsleitung setzt und dann die Geometrie der Oberfläche der langgestreckten Konstruktion bestimmt.

Es ist auch eine Einrichtung zur Kontrolle des Zustands eines langgestreckten Objekts, nämlich einer Konstruktion (PCT/SU 88/00082), bekannt, die eine Quelle modulierter Wellenenergie, die zur Bildung eines sich räumlich und zeitlich ändernden Bezugssignals bestimmt und in Form einer Reihenschaltung von einem Modulator und einem Erzeuger der Wellenenergie physikalischer Felder ausgeführt ist, eine lange Wellenenergieübertragungsleitung, die auf der Oberfläche der langgestreckten Konstruktion nach der vorgegebenen Koordinate S angeordnet, zur Erfassung und Übertragung von Informationen über Änderungen der Geometrie der Oberfläche der langgestreckten Konstruktion vorgesehen, mit dem Ausgang der Quelle der modulierten Wellenenergie verbunden und in Form eines Vielmoden-Wellenleiters mit mindestens einem Bezugssignal- und mindestens einem Meßkanal ausgeführt ist, die miteinander zusammenwirken und deren Verbindung von der Änderung der Geometrie der Oberfläche der langgestreckten Konstruktion abhängt, eine Einheit zur analogen Informationsverarbeitung, die zur Bestimmung der Geometrie der Oberfläche der langgestreckten Konstruktion unter Benutzung der Ausgangssignale von mindestens einem Bezugssignal- und mindestens einem Meßkanal vorgesehen, mit den Ausgängen dieser Kanäle der langen Wellenenergieübertragungsleitung verbunden ist, ein zur Abbildung der Geometrie der Oberfläche der langgestreckten Konstruktion bestimmtes Videoterminal, dessen Eingang an den Ausgang der Einheit zur analogen Informa-

- 8 -

tionsverarbeitung angeschlossen ist, ein erstes Raumfilter, das zur Erzeugung eines modulierten Signals vom Bezugssignalkanal mit vorgegebener räumlich-zeitlicher Struktur von Feldern der Moden bestimmt und zwischen dem Ausgang der Quelle der modulierten Wellenenergie physikalischer Felder und der langen Wellenenergieübertragungsleitung geschaltet ist, ein zweites Raumfilter aufweist, das zur räumlichen Trennung von Feldern der Moden mindestens eines durch ein Bezugssignal aktivierten Bezugssignalkanals und von Feldern der Moden mindestens eines Meßkanals, der durch eine von der Änderung der Geometrie der Oberfläche der langgestreckten Konstruktion abhängige Verbindung zwischen den Kanälen aktiviert wird, vorgesehen und zwischen den Ausgängen der langen Wellenenergieübertragungsleitung und den Eingängen der Einheit zur analogen Informationsverarbeitung angeordnet ist, wobei der Eingang und der Ausgang mindestens eines Bezugssignalkanals als erster Eingang bzw. erster Ausgang für die Wellenenergie der Felder des jeweiligen ersten und zweiten Raumfilters auftreten, der Eingang und der Ausgang mindestens eines Meßkanals als zweiter Eingang bzw. zweiter Ausgang für die Wellenenergie der Felder des ersten und des zweiten Raumfilters fungieren.

Für das bekannte Verfahren zur Kontrolle des Zustands einer langgestreckten Konstruktion und für die bekannte Einrichtung für die Durchführung dieses Verfahrens, die der vorliegenden Erfindung am nächsten liegen, sind folgende Einschränkungen kennzeichnend.

Im Zusammenhang mit der Benutzung der langen Wellenenergieübertragungsleitung in Form des Vielmoden-Wellenleiters mit in Abhängigkeit von der Krümmung dieser Leitung zusammenwirkenden Kanälen und mit der Anordnung der Leitung selbst an einer Mantellinie der Oberfläche der zu kontrolierenden Konstruktion gelingt es auf dem bekannten Wege, nur die Krümmung der einen Mantellinie der Oberfläche dieser Konstruktion zu ermitteln. Hierbei wird die Krümmung der Mantellinie der Krümmung der Achse der langgestreckten Konstruktion genau entsprechen, wenn die lange Wellenenergieübertragungsleitung in der Ebene der Verbiegung der Konstruktion liegen und die Verbiegung selbst nur in dieser einen Ebene existieren wird. In den meisten Fällen wirken auf die langgestreckten Konstruktionen äußere Belastungen (Kräfte und Momente) ein, was zur Erscheinung auch räumlicher Verformungen der langgestreckten Konstruktion und folglich zu einer Krümmung und Torsion ihrer Längsachse und der Oberfläche führt. Im Zusammenhang mit der Notwendigkeit, die lange Wellenenergieübertragungsleitung auf der Oberfläche der zu kontrollierenden langgestreckten Konstruktion selbst bei Auftreten der Torsion ohne Verbiegung zu befestigen, werden vom Ausgang derartiger Leitung Informationen über das Vorhandensein der Verbiegung der Konstruktion anfallen, da unter der Wirkung der Torsion der Oberfläche dieser Konstruktion die Leitung verbogen wird. Außerdem existiert ein gegenseitiger Einfluß der Biegung und der Torsion auf die Krümmung der Mantellinie bei Vorhandensein von zusammengesetzten Verformungen der Biegung und der Torsion der Konstruktion und also auch der Leitung. Daher entsteht ein Meßfehler bei der Messung der Krümmung der Mantellinie und also auch der Längsachse der Konstruktion. Die Anordnung der Leitung in Richtung einer Mantellinie der langgestreckten Konstruktion läßt nicht die Torsion der Längsachse eindeutig kontrollieren. Das Verfahren und die Einrichtung, von denen ausgegangen wird gestatten es nicht, die Krümmung und Torsion der Längsachse der zu kontrollierenden langgestreckten Konstruktion bei Vorhandensein zusammengesetzer Verformungen selektiv zu ermitteln. Dies führt seinerseits zu einer niedrigen Genauigkeit in der Bestimmung der Geometrie der Längsachse im Raum und der Zeit und als Folge dessen zu einer niedrigen Genauigkeit in der Messung der Koordinaten von gewählten Punkten der Längsachse der langgestreckten Konstruktion. Das Fehlen der getrennten Informationen über die Verteilung der Krümmung und der Torsion gestattet es nicht, den gespannten und verformten Zustand der langgestreckten Konstruktion zu bestimmen und folglich deren Festigkeit zu bewerten und zu prognostizieren.

Offenbarung der Erfindung

Der Erfindung liegt die Aufgabe zugrunde, ein Verfahren und eine Einrichtung zur Kontrolle des Zustands einer langgestreckten Konstruktion zu schaffen, die es gestatten, eine Verbindung zwischen den Kennwerten des dynamischen Zustands der Elemente der Oberfläche der langgestreckten Konstruktion und ihrer Längsachse herzustellen und damit die Geometrie der Achse im Raum und der Zeit unter den Bedingungen der Einwirkung äußerer Belastungen auf die langgestreckte Konstruktion zu bestimmen, was es erlaubt, die Krümmung und die Torsion der Längsachse dieser Konstruktion selektiv zu ermitteln und damit die Genauigkeit der Messung der Koordinaten der gewählten Punkte der Längsachse der langgestreckten Konstruktion zu erhöhen.

Das Erfindungswesen besteht darin, daß bei dem Verfahren zur Kontrolle des Zustands einer langgestreckten Konstruktion, bei dem man eine lange Wellenenergieübertragungsleitung wählt, die eine Fortpflanzung von Signalen in Form von Moden mit bekannter räumlich-zeitlicher Struktur physikalischer Felder gewährleistet, die gewählte lange Wellenenergieübertragungsleitung auf der Oberfläche längs der Längsachse der langgestreckten Konstruktion in Richtung der vorgegebenen Koordinate S anordnet, auf der langen Wellenenergieübertragungsleitung mindestens einen Bezugssignalkanal und mindestens einen Meßkanal mit bekannten Verzögerungen von Phasengeschwindigkeiten der Moden in jedem dieser Kanäle auswählt, eine gerichtete Wechselwirkung von Feldern der Moden mindestens eines Bezugssignalkanals und mindestens eines Meßkanals entlang der langen Wellenenergieübertragungsleitung in Abhängigkeit von der Änderung der Geometrie der Oberfläche der langgestreckten Konstruktion sichert, um im Meßkanal ein Signal zu erzeugen, das sich im Vorgang der Ausbreitung des Signals über den Bezugssignal entsprechend der Änderung der Geometrie der Oberfläche der langgestreckten Konstruktion ändert, die den Zustand dieser Konstruktion charakterisiert, ein zeitlich moduliertes Signal in Form von Schwingungen physikalischer Felder bildet und diese Schwingungen in ein Signal mit vorgegebener räumlich-zeitlicher Struktur von Feldern der Moden umwandelt, die Felder der Moden an den Ausgängen mindestens eines Bezugssignalkanals und mindestens eines Meßkanals der langen Wellenenergieübertragungsleitung in nur von der Zeit abhängige elektrische Signale umsetzt, die Amplitude des elektrischen Signals am Ausgang des Bezugssignalkanals abtrennt, das elektrische Signal am Ausgang des Meßkanals umgekehrt proportional dem Amplitudenwert des elektrischen Signals am Ausgang des Bezugssignalkanals verstärkt, eine lineare Skalierung verwendet, die die Größe der Differenz der Verzögerungen der Phasengeschwindigkeiten der Moden des Bezugssignal- und des Meßkanals der langen Wellenenergieübertragungsleitung in Verbindung mit der laufenden Zeit der Kontrolle und dem Meßwert der vorgegebenen Koordinate S entlang der langen Wellenenergieübertragungsleitung setzt und dann die Geometrie der Oberfläche der langgestreckten Konstruktion bestimmt, gemäß der Erfindung man die gerichtete Wechselwirkung von Feldern der Moden mindestens eines Bezugssignal- und mindestens eines Meßkanals entlang der langen Wellenenergieübertragungsleitung in Abhängigkeit vom Wert der Krümmung der Oberfläche der langgestreckten Konstruktion sichert und die lange Wellenenergieübertragungsleitung auf der Oberfläche der langgestreckten Konstruktion in Richtung wenigstens dreier Mantellinien anordnet und befestigt, auf Grund der Ausgangssignale von mindestens einem Bezugssignal- und mindestens einem Meßkanal der langen Wellenenergieübertragungsleitung Werte der Krümmung wenigstens der drei Mantellinien der Oberfläche der langgestreckten Konstruktion ermittelt, anhand der erhaltenen Werte der Krümmung wenigstens der drei Mantellinien der Oberfläche der langgestreckten Konstruktion Werte der Krümmung und Torsion der Längsachse der langgestreckten Konstruktion errechnet und anhand der gewonnenen Werte der Krümmung und Torsion der Längsachse der langgestreckten Konstruktion Koordinaten der gewählten Punkte der Längsachse der langgestreckten Konstruktion bestimmt.

Es ist zweckmäßig, auf Grund der gewonnenen Werte der Krümmung und Torsion der Längsachse der langgestreckten Konstruktion Verteilungen innerer Belastungen über die Längsachse der langgestreckten Konstruktion, die den gespannten und verformten Zustand dieser Konstruktion charakterisieren, zu bestimmen.

Zur Durchführung einer Fernkontrolle aus mindestens einem beliebigen von dieser Konstruktion entfernt liegenden Fernkontrollpunkt ist es sinnvoll, die Lage dieses Fernkontrollpunktes in bezug auf mindestens einen Punkt der Längsachse der langgestreckten Konstruktion zu bestimmen und die Informationen über die Werte der Krümmung und der Torsion der Längsachse der langgestreckten Konstruktion an den Fernkontrollpunkt zu vermitteln.

Das Erfindungswesen besteht auch darin, daß die Einrichtung zur Kontrolle des Zustands einer langgestreckten Konstruktion, die eine Quelle der modulierten Wellenenergie, die zur Bildung eines sich räumlich und zeitlich ändernden Bezugssignals bestimmt und in Form einer Reihenschaltung von einem Modulator und einem Erzeuger der Wellenenergie physikalischer Felder ausgeführt ist, eine lange Wellenenergieübertragungsleitung, die auf der Oberfläche der langgestreckten Konstruktion nach der vorgegebenen Koordinate S angeordnet, zur Erfassung und Übertragung von Informationen über Änderungen der Geometrie der Oberfläche der langgestreckten Konstruktion vorgesehen, mit dem Ausgang der Quelle der modulierten Wellenenergie verbunden und in Form eines Vielmoden-Wellenleiters mit mindestens einem Bezugssignal- und mindestens einem Meßkanal ausgeführt ist, die miteinander zusammenwirken und deren Verbindung von der Änderung der Geometrie der Oberfläche der langgestreckten Konstruktion abhängt, eine Einheit zur analogen Informationsverarbeitung, die zur Bestimmung der Geometrie der Oberfläche der langgestreckten Konstruktion unter Benutzung der Ausgangssignale von mindestens einem Bezugssignal- und mindestens einem Meßkanal vorgesehen, mit den Ausgängen dieser Kanäle der langen Wellenenergieübertragungsleitung verbunden ist, ein zur Abbildung der Geometrie der Oberfläche der langgestreckten Konstruktion bestimmtes Videoterminal, dessen Eingang mit dem Ausgang der Einheit zur analogen Informationsverarbeitung elektrisch gekoppelt ist, ein erstes Raumfilter, das zur Erzeugung eines modulierten Signals vom Bezugssignalkanal mit vorgegebener räumlich-zeitlicher Struktur von Feldern der Moden bestimmt und zwischen dem Ausgang der Quelle der modulierten Wellenenergie physikalischer Felder und der langen Wellenenergieübertragungsleitung geschaltet ist, ein zweites Raumfilter aufweist, das zur räumlichen Trennung von Feldern der Moden mindestens eines durch ein Bezugssignal aktivierten Bezugssignalkanals und von Feldern der Moden mindestens eines Meßkanals, der durch eine von der Änderung der Geometrie der Oberfläche der langgestreckten Konstruktion abhängige Verbindung zwischen den Kanälen aktiviert wird, vorgesehen und zwischen den Ausgängen der langen Wellenenergieübertragungsleitung und den Eingängen der Einheit zur analogen Informationsverarbeitung angeordnet ist, wobei der Eingang und der Ausgang mindestens eines Bezugssignalkanals als erster Eingang bzw. erster Ausgang für die Wellenenergie der Felder des jeweiligen ersten und zweiten Raumfilters auftreten, der Eingang und der Ausgang mindestens eines Meßkanals als zweiter Eingang bzw. zweiter Ausgang für die Wellenenergie der Felder des ersten und des zweiten Raumfilters fungieren, gemäß der Erfindung einen Analog-Digital-Wandler (ADW), einen Mikroprozessor enthält, dessen Eingang mit dem Ausgang des ADW verbunden ist, dessen Eingang mit dem Ausgang der Einheit zur analogen Informationsverarbeitung gekoppelt ist, wobei der Ausgang des Mikroprozessors an den Eingang des Videoterminals angeschlossen und die lange Wellenenergieübertragungsleitung auf der Oberfläche der langgestreckten Konstruktion in Richtung von wenigstens drei Mantellinien der Oberfläche dieser Konstruktion befestigt ist, die jeweils in Ebenen liegen, die durch die Längsachse der langgestreckten Konstruktion durchgehen und gleiche Raumwinkel bilden.

Es ist möglich, daß die Einrichtung zur Kontrolle des Zustands einer langgestrecken Konstruktion mindestens einen Sendeempfangskanal für Informationen über die Werte der Krümmung der wenigstens drei Mantellinien der Oberfläche der langgestreckten Konstruktion aus einem beliebigen Punkt dieser Konstruktion, die für einen Fernkontrollpunkt bestimmt sind, enthält, der in unmittelbarer Nähe der langgestreckten Konstruktion angeordnet eine erste Antenne und eine Kontrollvorrichtung, die eine Quelle der modulierten Wellenenergie, eine Einheit zur analogen Informationsverarbeitung, ein erstes und ein zweites Raumfilter, eine Reihenschaltung von einem Sender, einem Sende-Empfangs-Umschalter und einem Auslöser beinhaltet, dessen Ausgang an den Eingang der Quelle der modulierten Wellenenergie angelegt ist, während der Eingang des Senders mit dem Ausgang der Einheit zur analogen Informationsverarbeitung und der Eingang-Ausgang des Sende-Empfangs-Umschalters mit der ersten Antenne verbunden ist, sowie in einer Entfernung von der langgestreckten Konstruktion angeordnet eine zweite Antenne und eine Zentrale für Nachrichtenverbindung, digitale Informationsverarbeitung und -darstellung enthält, die einen ADW,
einen Mikroprozessor, ein Videoterminal und eine Reihenschaltung von einem ersten Sender, einem ersten Sende-
Empfangs-Umschalter, einem ersten Empfänger, dessen Ausgang an den Eingang des ADW angeschlossen ist, wobei
der Eingang-Ausgang des ersten Sende-Empfang-Umschalters
mit der zweiten Antenne gekoppelt ist, aufweist.

Im Unterschied zu den bekannten Verfahren zur Kontrolle von langgestreckten Konstruktionen und zu den diese Verfahren durchführenden Einrichtungen gestattet es
die vorliegende Erfindung, tatsächlich zum erstenmal kontinuierliche Verteilungen der Krümmung und Torsion der
Längsachse der langgestreckten Konstruktion entlang der
vorgegebenen Bogenkoordinate selektiv zu bestimmen und
zu kontrollieren, die, wie dies aus der Differentialgeometrie bekannt ist, natürliche Gleichungen einer Kurve
darstellen und deren Form und Verlauf in einem dreidimensionalen Raum absolut genau festlegen. Indem man also
einen beliebigen Punkt der Längsachse der langgestreckten Konstruktion als Koordinatenanfangspunkt ansieht und
die bekannten Größen der Krümmung und der Torsion dieser
Achse benutzt, bestimmt man eindeutig die Lage eines beliebigen anderen Punktes der Längsachse dieser Konstruktion bezüglich des als Koordinatenanfangspunkt angenommenen Punktes. Deshalb ist neben der effektiven Lösung
der wichtigen gestellten Aufgabe hinsichtlich der Durchführung der Kontrolle des Zustands der langgestreckten
Konstruktion unter einer exakten Bestimmung des Ortes
der Entstehung gefährlicher Verformungen gleichzeitig
zusätzlich eine für die Technik prinzipielle neue Möglichkeit dahingehend realisiert, daß verschiedene Arten
der zu kontrollierenden langgestreckten Konstruktionen
als mechanische Orientierungssysteme zum Einsatz gelangen.

Die Anwendung der vorliegenden Erfindung beispielsweise zur Kontrolle von Kabeln bzw. Seilen in Seekomplexen zur geologischen Erkundung gestattet es, die Aufgabe einer hochgenauen Bestimmung der gegenseitigen Anordnung eines geschleppten Unterwassergeräts bezüglich
des Schiffes unter gleichzeitiger Kontrolle der mechanischen Kennwerte des Schleppkabels bzw. -seiles neuartig zu lösen. Hierbei wird auch die Sicherheit der Kontrolle durch Wegfall des Wassermediums als Mittel zur Ausbreitung herkömmlicherweise verwendeter hydroakustischer
Signale wesentlich erhöht. Da dieser Typ der langgestreckten Konstruktionen in einem Medium mit im Raum
und der Zeit veränderlichen Unterwasserströmungen betrieben wird und der Einwirkung einer Schiffsschwingung
ausgesetzt ist, so gibt die genaue Bestimmung der Ortslage des Unterwassergeräts bezüglich des Schiffs die
Möglichkeit, die Aussagesicherheit einer Fernsehaufnahme
des Bodens und der Daten einer seismoakustischen Erkundung beträchtlich zu steigern.

Die Kenntnis der Koordinate des Endpunktes eines Bohrwerkzeuges, beispielsweise eines Turbobohrers, beim Bohren in bezug auf die Bohrlochmündung gestattet es, ein
gesteuertes Richtbohren zu verwirklichen. Dies ist bei
der Niederbringung zusätzlicher schräger Bohrlöcher
zwecks Unterdrückung von Springerquellen und zwecks Brandlöschung besonders notwendig, was einen erheblichen
wirtschaftlichen Schaden durch
Notfälle erspart.

Nicht minder wichtig erscheinen Vorteile, die bei
Benutzung der Erfindung zur Ermöglichung einer Kopplung
von Orbitalstationen mit Weltraumschiffen erzielt werden. Nachdem die Geschwindigkeiten im Annäherungbereich
ausgeglichen und eine mechanische flexible Verbindung
zwischen den zu koppelnden Objekten hergestellt worden
ist, kann unter Bestimmung der gegenseitigen Lage der
Objekte anhand der Geometrie der flexiblen Verbindung
im Raum störungsfrei und rasch gekoppelt werden. In ähn-

licher Weise kann die Lage eines Astronauten oder Aquanauten überwacht werden, der mittels der flexiblen Verbindung mit einem Lebenserhaltungssystem gekoppelt ist.

Die obengenannten Beispiele bestätigen die Aktualität der Aufgabe, die durch die dargelegte Erfindung
gelöst wird, und veranschaulichen die Effektivität der
erreichbaren Vorteile.

Kurze Beschreibung der Zeichnungen

Die Erfindung soll nachstehend anhand eines konkreten Ausführungsbeispiels unter Bezugnahme auf die beiliegenden Zeichnungen näher erläutert werden. Es zeigt:

Fig. 1 eine in der Ebene verbogene langgestreckte
Konstruktion mit gewählten Koordinatensystemen, gemäß
der Erfindung;

Fig. 2 grafische Darstellungen der Abhängigkeit der
Verfahrensfehler beim Inklinometer- und Wellenleiter-
Verfahren zur Kontrolle des Zustands einer langgestreckten Konstruktion von der linearen Auflösung, gemäß
der Erfindung;

Fig. 3 ein Strukturschaltbild einer erfindungsgemäßen
Einrichtung zur Kontrolle des Zustands einer langgestreckten Konstruktion;

Fig. 4 ein Strukturschaltbild einer erfindungsgemäßen
Einrichtung zur Fernkontrolle des Zustands einer langgestreckten Konstruktion mit zwei Sendeempfangskanälen und
einer Meßbasis bei der Fernkontrolle;

Fig. 5 eine schematische Darstellung der Anordnung
der Meßbasis auf einem Schiff, von dem aus eine Fernkontrolle einer langgestreckten Konstruktion vorgenommen
wird, die in zwei räumlichen Stellungen gezeigt ist,
gemäß der Erfindung;

Fig. 6 ein Strukturschaltbild einer erfindungsgemäßen Einrichtung zur Fernkontrolle des Zustands eines
langgestreckten Objekts mit zwei Sendeempfangskanälen
und einer mit Hilfe der langgestreckten Konstruktion organisierten Meßbasis;

Fig. 7 eine Zeichnung, die einen geometrischen Aufbau darstellt, der die gegenseitige Anordnung von vier
vorgegebenen Punkten der Längsachse einer langgestreckten Konstruktion und eines Fernkontrollpunktes veranschaulicht, gemäß der Erfindung;

Fig. 8 eine langgestreckte Konstruktion in Form eines im Wassermedium untergebrachten isolierten Seiles,
an dessen oberem Ende eine Boje mit einer Kontrollvorrichtung und einer Antenne und dessen unteres Ende auf der
Bodenfläche befestigt ist, gemäß der Erfindung;

Fig. 9 einen Querschnitt einer langgestreckten Konstruktion in Form eines Seiles mit einer zylindrischen
Schutzhülle, in der eine lange Wellenenergieübertragungsleitung  in Richtung von vier Mantellinien der langgestreckten Konstruktion untergebracht ist, in einer Vergrößerung, gemäß der Erfindung;

Fig. 10 einen Teil der in Fig. 8 dargestellten langgestreckten Konstruktion in der Zone ihrer Ankopplung an
eine Last in axonometrischer Darstellung, in einer Vergrößerung, gemäß der Erfindung.

Beste Ausführungsform der Erfindung

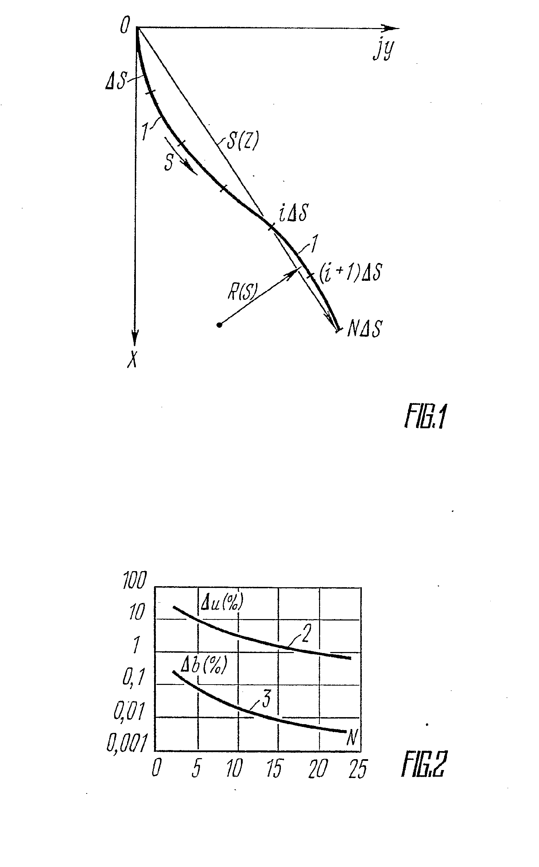

Um die Genauigkeitserhöhung bei Verwendung des Wellenleiter-Verfahrens gegenüber dem Inklinometer-Verfahren
unter Beweis zu stellen, sei der Fall einer einfachen
Biegung einer langgestreckten Konstruktion 1 (Fig. 1) betrachtet, der durch eine alternierende Verteilung der
Krümmung $K(S) = R'(S)$, worin S die Bogenkoordinate in
Richtung der langgestreckten Konstruktion 1, $R'(S)$ der
Krümmungsradius dieser Konstruktion ist, gekennzeichnet
wird.

Die langgestreckte Konstruktion 1 läßt sich bequem
in Form einer flachen Kurve in einer komplexen Ebene
$Z(x, jy)$ darstellen, in der der Koordinatenanfangspunkt O
mit dem Endpunkt dieser Kurve zusammenfällt. Der Radiusvektor S(Z) verbindet den Koordinatenanfangspunkt O (x=0, jy=0) mit der laufenden Koordinate S und wird durch den Ausdruck

$$S(Z)= \int_{0}^{S} \left[ (\sin(\Psi(S)/2))(\Psi(S)/2)^{-1}\exp(j+(S)) \right] dS \quad (1)$$

beschrieben, worin $\Psi(S)= \int_{0}^{S} K(S)dS$ ist.

Beim bekannten Inklinometer-Verfahren messen die Geber einen Winkel $\Psi$ der Abweichung der Achse der langgestreckten Konstruktion 1 von der Vertikalen. Der durch diese Geber gemessene Parameter ist ein Mittelwert des Winkels $\Psi(S)$ auf einer Strecke $\Delta S$, die ein Intervall zwischen den Gebern in Richtung der Konstruktion 1 darstellt.

Dann ist

$$\tilde{\Psi}_i = \Psi_{i+1} - \Psi'_i = \int_{i\Delta S}^{(1+i)\Delta S} K(S)dS \quad (2)$$

worin $\Psi_i$ und $\Psi_{i+1}$ die Anzeigen der Geber mit der Koordinate $i\Delta S$ bzw. $(i+1)\Delta S$ sind.

Bei Benutzung einer auf der Oberfläche der langgestreckten Konstruktion 1 in der Ebene einer Biegung in Richtung der Mantellinie dieser Konstruktion angeordneten und befestigten langen Wellenenergieübertragungsleitung kann man nach der Anfangsbearbeitung des Meß- und des Bezugssignals, in deren Folge die zu messende Krümmung K(S) ermittelt wird, durch Integralfaltung des zu kontrollierenden Parameters und der Apparatefunktion der langen Wellenenergieübertragungsleitung (P.M. Sedletskii u.a. "Voprosy sinteza radiolokatsionnykh Signalov" (Zu Fragen einer Synthese von Funkmeßsignalen), 1970, Verlag "Sovetskoe radio", Moskau, S. 20) eine durch die lange Wellenenergieübertragungsleitung gemessene Größe des Winkels der Abweichnung der Längsachse der langgestreckten Konstruktion 1 von der Vertikalen erhalten:

$$\tilde{\Psi}(S) = \int_{0}^{S} K(x)f(S-x)dx \quad (3)$$

worin f(S - x) die Apparatenfunktion dieser langen Leitung und x die Integrationsvariable ist.

Im Falle eines idealen Gebers - einer langen Wellenenergieübertragungsleitung-stellt f(S-x) ein Rechteck mit einer unendlich steilen Flanke in den Punkten S = x und x = 0 dar. Hierbei ist $\tilde{\Psi}(S) = \Psi(S)$.

In der realen langen Wellenenergieübertragungsleitung weist die Apparatefunktion f(S - x) eine endliche Steilheit der Flanke mit einer Dauer von $\Delta S$ auf. Beispielsweise läßt sich $\Psi(S)$ für eine Apparatefunktion der Gauß-form wie folgt darstellen:

$$\tilde{\Psi}(S) = \int_0^S K(x)(1-\exp(-((S-x)/\Delta S)^2)dx = \Psi(S) - \sigma(S) \qquad (4)$$

worin $\sigma(S) = \int_0^S K(x)\exp(-((S-x)/\Delta S)^2)dx$ ist.

Die mit Hilfe der Inklinometer-Geber und der langen Wellenenergieübertragungsleitung ermittelten Ausdrücke für die Radiusvektoren S (Z) bzw. $S_b(Z)$ werden in folgender Form:

$$S_u(Z) = \sum_{i=0}^{N} \left[\sin((\Psi(S)-\sigma(S))/2)((\Psi(S)-\sigma(S))/2)^{-1} \times \exp(j(\Psi(S)-\sigma(S))\right]dS \qquad (5)$$

$$S_b(Z) = \int_0^L \left[\sin((\Psi(S)-\sigma(S))/2)((\Psi(S)-\sigma(S))/2)^{-1} \times \exp(j(\Psi(S)-\sigma(S)))\right]dS \qquad (6)$$

geschrieben, worin

N die Anzahl der längs der langgestreckten Konstruktion mit einem Abstand von $\Delta S$ aufgestellten Geber,

L die Länge der langen Wellenenergieübertragungsleitung ist.

Dann ergeben sich die Gesamtfehler bei der Bestimmung der Koordinate des Endpunktes der Achse der langgestreckten Konstruktion 1 im Inklinometer bzw. Wellenleiter-Verfahren mit Rücksicht auf die Ausdrücke (1), (5) und (6) zu:

$$\Delta_u(Z) = S(Z) - S_u(Z) = \sum_{i=1}^{N} \int_{\Delta S_i} (\sin\Psi(S)/2)(\Psi(S)/2)^{-1} \times (\exp j\Psi(S'))(1-\exp j\sigma_i)dS, \qquad (7)$$

$$\Delta_b(Z) = S(Z) - S_b(Z) = \int_0^L (\sin\Psi(S)/2)(\Psi(S)/2)^{-1} \times (\exp j\Psi(S))(1-\exp j\sigma(S))dS, \qquad (8)$$

worin $\sigma_i = (\Delta S^{-1} \int_{\Delta S_i} \Psi^2(S)sA - \Psi_i^2)^{1/2}$,

$$\sigma(S) = \left[\int_0^S \Psi^2(x)f(S-x)dx - \Psi^2(S)\right]^{1/2}$$

ist.

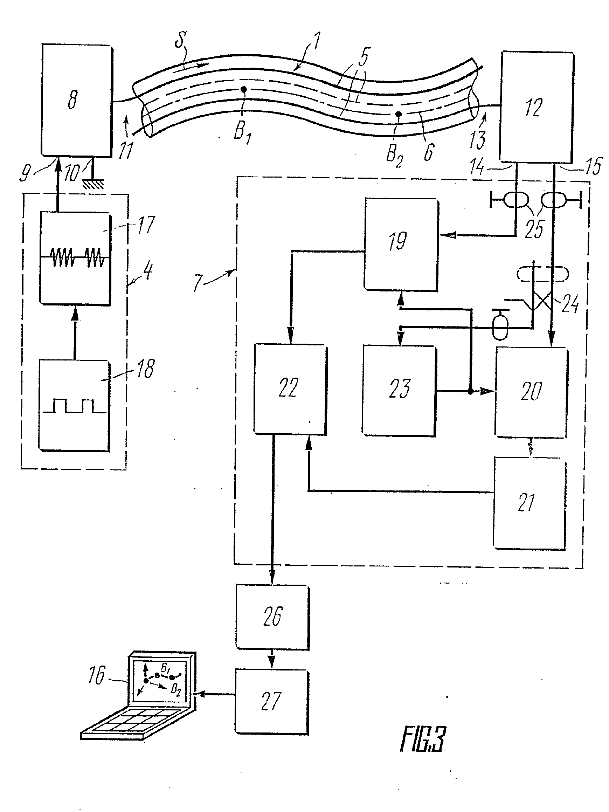

Die Ausdrücke (7) und (8) wurden zu Berechnungen der Verfahrensfehler beim Inklinometer- und Wellenleiter-Verfahren herangezogen, deren Ergebnisse in Form grafischer Darstellungen in Fig. 2 aufgeführt sind.

Die Kurve 2 bringt die Abhängigkeit $\Delta_u \% = \left[\Delta_u(Z)/S(Z)\right]100\%$ von der Anzahl N der in einem Abstand $\Delta S = L/N$ voneinander entlang der langgestreckten Konstruktion befestigten Inklinometer-Geber zum Ausdruck. Ihrerseits zeigt die Kurve 3 die Abhängigkeit $\Delta_b\% = \left[\Delta_b(Z)/S(Z)\right]100\%$ von $N = L/\Delta S$, wobei $\Delta S$ das Auflösungsvermögen der langen Wellenenergieübertragungsleitung bedeutet. Beim Vergleich der Abhängigkeiten 2 und 3 werden die Vorteile des Wellenleiter-Verfahrens für die Bestimmung der Koordinate eines gewählten Punktes der Längsachse der langgestreckten Konstruktion 1 (Fig. 1) im Vergleich zum Inklinometer-Verfahren sichtbar, weil der Verfahrensfehler bei ein und derselben Anzahl N (Fig. 2) für eine 6000 m lange langgestreckte Konstruktion um ca. 2 Größenordnungen abnimmt.

Alle angeführten Erwägungen gelten für den Fall einer einfachen Biegung der langgestreckten Konstruktion, während praktisch im wesentlichen räumliche Verformungen der langgestreckten Konstruktionen unter der Wirkung zufälliger Außenbelastungen auftreten. Der gespannte und verformte Zustand der langgestreckten Konstruktion wird also nicht nur durch die Krümmung, sondern auch durch die Torsion der Längsachse dieser Konstruktion im Raum festgelegt. Daher gilt es, dem Zusammenhang zwischen der Krümmung der Mantellinien der Oberfläche der langgestreckten Konstruktion und der Geometrie ihrer Längsachse im Raum auf den Grund zu gehen. Zu diesem Zweck werden eine minimal notwendige Anzahl der zu kontrollierenden Mantellinien und Forderungen an die Anordnung der langen Wellenenergieübertragungsleitungen auf der Oberfläche einer zylindrischen langgestreckten Konstruktion begründet.

Ausgehend von den bekannten Feststellungen der Differentialgeometrie und des Satzes von Meusnier für den

- 22 -

Fall einer räumlichen Verbiegung der langgestreckten Konstruktion bei Fehlen einer Verdrehung ist die Krümmung $K_i(\varphi)$ der Mantellinie der zylindrischen langgestreckten Konstruktion mit einem Parameter $S_i$ (S - Bogenkoordinate der Längsachse) unter der Bedingung $d \ll R_i$ durch die Formel

$$K_i(\varphi) = K_{N_i} \cos(\varphi - \varphi_o) \qquad (9)$$

gegeben, worin $K_{N_i} = (R_i - d/2)^{-1}$ die Krümmung der Mantellinie der Zylinderfläche in der Biegungsebene, $\varphi \in |0, 2\pi|$ der Zeitwert des in der Querschnittsebene der Zylinderkonstruktion gemessenen Winkels, $\varphi_o$ der Winkel in der Querschnittsebene zwischen der urspünglichen Mantellinie und der in der Biegungsebene der Konstruktion bei Fehlen einer Drillung liegenden Mantellinie, $R_i$ der Krümmungsradius der Längsachse, d der Durchmesser der Zylinderfläche ist.

Der Ausdruck (9) läßt sich wie folgt darstellen:

$$K_i(\varphi) = K_{N_i} \cos\varphi_o \cos\varphi + K_{N_i} \sin\varphi \sin\varphi_o = K_1 \cos\varphi + K_2 \sin\varphi \quad (10)$$

wobei $K_1 = K_{N_i} \cos\varphi_o$, $K_2 = K_{N_i} \sin\varphi_o$ ist. $\qquad (11)$

Daraus folgt, daß

$$K_{N_i} = \sqrt{K_1^2 + K_2^2} \qquad (12)$$

ist.

Zur Bestimmung von $K_{N_i}$ durch $K_1$ und $K_2$ reicht es also aus, die Krümmung der Mantellinien in der Querschnittsebene der Konstruktion bei zwei Werten des Winkels $\varphi$ vorzunehmen, wie dies beispielsweise beim bekannten Verfahren bei $\varphi = 0$ und $\varphi = \pi/2$ durchgeführt wird. Da in diesem Fall im Schnitt mit der Koordinate $S_i$ nicht die Krümmung der Längsachse, sondern der Winkel der Abweichung der Achse von der Vertikalen gemessen wird, so wird bei der Bestimmung der Krümmung selbst ein Zusatzfehler hineingebracht.

Bei den bekannten $K_1 = K_i(\pi/2)$ und $K_2 = K_i(0^o)$ lassen

- 23 -

sich auf Grund der Ausdrücke (10), (11), (12) $\varphi_o$ und $K_i(\varphi)$ leicht ableiten.

Bei gleichzeitiger Biegung und Drillung der Konstruktion gilt für die Krümmung der Mantellinie der Ausdruck

$$\widetilde{K}_i(\varphi) = \widetilde{K}_o + \widetilde{K}_1 \cos\varphi + \widetilde{K}_2 \sin\varphi \qquad (13)$$

Daraus folgt, daß bei Vorliegen nur der Drillung der langgestreckten Konstruktion die Krümmung deren sämtlicher Mantellinien konstant, also unabhängig von $\varphi$ ist, während bei Fehlen der Drillung und bei Vorliegen der Biegung sie durch die Formel (10) bestimmt wird.

Somit wird unter der Bedingung $\widetilde{K}_i(\varphi_o) = \widetilde{K}_o$ der Winkel $\varphi_o$ ermittelt, der einen Querschnitt definiert, in dem die Krümmung der Mantellinie lediglich durch die Torsion der Zylinderfläche um die Längsachse der langgestreckten Konstruktion bedingt wird.

Dies führt zur Beziehung

$$\widetilde{K}_1 \cos\varphi_o + \widetilde{K}_2 \sin\varphi_o = 0 \qquad (14)$$

die bei

$$\widetilde{K}_1 = K_{N_i} \sin\varphi_o \quad \text{und} \quad K_2 = -K_{N_i} \cos\varphi_o$$

gültig ist, worin

$$\widetilde{K}_{N_i} = \sqrt{\widetilde{K}_1^2 + \widetilde{K}_2^2} \quad ,$$

ist.

Daher ist $\varphi_o = \operatorname{arctg} \widetilde{K}_1/\widetilde{K}_2$, und die Torsion der Längsachse der langgestreckten Konstruktion ergibt sich entsprechend der bekannten Formel der Differentialgeometrie zu

$$\tau = \widetilde{K}_o + d\varphi_o/dS \qquad (15)$$

Zur Bestimmung von $\widetilde{K}_o$, $\widetilde{K}_1$, $\widetilde{K}_2$ sind drei Messungen der Krümmung $\widetilde{K}_i(\varphi)$ der Mantellinien bei drei Winkeln $\varphi_i$, der beispielsweise bei $\varphi_1 = 0^o$, $\varphi_2 = 120^o$, $\varphi_3 = 240^o$, vorzu-

nehmen. Dies führt zu einem Gleichungssystem

$$
\begin{aligned}
\tilde{K}_i(0^\circ) &= \tilde{K}_0 + \tilde{K}_1 + 0 \cdot \tilde{K}_2 \\
\tilde{K}_i(120^\circ) &= \tilde{K}_0 - 1/2\tilde{K}_1 + \sqrt{3}/2\tilde{K}_2 \\
\tilde{K}_i(240^\circ) &= \tilde{K}_0 - 1/2\tilde{K}_1 - \sqrt{3}/2\tilde{K}_2
\end{aligned}
\tag{16}
$$

oder in der Matrizenform zu:

$$
\begin{pmatrix} \tilde{K}_i(0^\circ) \\ \tilde{K}_i(120^\circ) \\ \tilde{K}_i(240^\circ) \end{pmatrix}
=
\begin{pmatrix} 1 & 1 & 0 \\ 1 & -1/2 & \sqrt{3}/2 \\ 1 & -1/2 & -\sqrt{3}/2 \end{pmatrix}
\cdot
\begin{pmatrix} \tilde{K}_0 \\ \tilde{K}_1 \\ \tilde{K}_2 \end{pmatrix}
\tag{17}
$$

Aus (17) ergibt sich ein folgender Matrizenausdruck

$$
\begin{pmatrix} \tilde{K}_0 \\ \tilde{K}_1 \\ \tilde{K}_2 \end{pmatrix}
=
\begin{pmatrix} 1/3 & 1/3 & 1/3 \\ 2/3 & 1/3 & -1/3 \\ 0 & 1/\sqrt{3} & -1/\sqrt{3} \end{pmatrix}
\cdot
\begin{pmatrix} \tilde{K}_i(0^\circ) \\ \tilde{K}_i(120^\circ) \\ \tilde{K}_i(240^\circ) \end{pmatrix}
\tag{18}
$$

Anhand von sich aus dem Ausdruck (18) ableitenden Werten $\tilde{K}_0$, $\tilde{K}_1$, $\tilde{K}_2$ werden gemäß den Ausdrücken (14) und (15) gesuchte Werte $\tilde{K}_{N_i}$, $\tilde{\tau}$ ermittelt. Es ist zu bemerken, daß bei der Anordnung von Meßleitungen auf der Oberfläche der Zylinderkonstruktion in Richtung der Mantellinien, die es gestatten, eine Verteilung der Krümmung $\tilde{K}(0^\circ, S)$, $\tilde{K}(120^\circ, S)$, $\tilde{K}(240^\circ, S)$ entlang der Mantellinien zu bekommen, Verteilungen $\tilde{K}_N(S)$ und $\tilde{\tau}(S)$ in Richtung der längs der Achse der Konstruktion meßbaren Koordinate S definiert werden.

Somit ist es bewiesen, daß zur Kontrolle des Zustands der langgestreckten Konstruktion auf dem Wege der Bestimmung der Geometrie ihrer Längsachse im Raum die Anordnung und die Befestigung der langen Wellenenergieübertragungsleitung auf der Oberfläche der langgestreckten Konstruktion längs der vorgegebenen Koordinate S in Richtung von mindestens drei Mantellinien minimal notwendig sind. Es ist gezeigt, daß die gemessenen Verteilungen der Krümmung dieser drei Mantellinien es gestatten, mit Hilfe der Ausdrücke (14),(15) und (18) die Geometrie der Längsachse der langgestreckten Konstruktion, d. h.

die Krümmung und die Torsion dieser Achse im Raum, eindeutig zu bestimmen. Da die Verteilung der Krümmung und Torsion einer beliebigen Leitung durch deren natürliche Gleichungen dargestellt wird, so ist die Lage jedes gewählten Punktes dieser Leitung im Raum festgelegt und also durch die Form und die Lage der räumlichen Kurve der Längsachse der langgestreckten Konstruktion dargestellt. Dadurch wird eine gegenseitige Anordnung beliebiger gewählter Punkte dieser Längsachse erzielt.

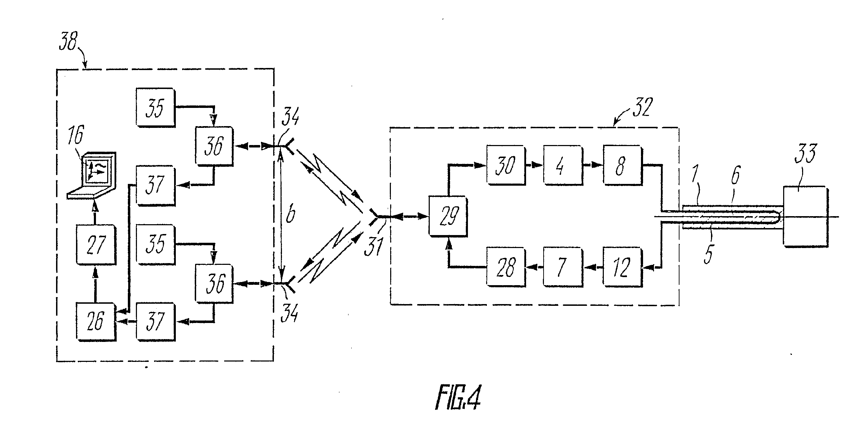

Die Einrichtung zur Kontrolle des Zustands einer langgestreckten Konstruktion enthält eine Quelle 4 (Fig. 3) modulierter Wellenenergie, eine lange Wellenenergieübertragungsleitung 5, die in der Zone der Kontrolle der in Form eines Seils hergestellten langgestreckten Konstruktion 1 in Richtung der vorgegebenen Koordinate S angeordnet und zur Erfassung und Übertragung von Informationen über Änderungen der Geometrie der Oberfläche der langgestreckten Konstruktion 1 bestimmt ist, die der Geometrie ihrer Längsachse 6 entspricht. Die lange Wellenenergieübertragungsleitung 5 ist in Form eines Vielmoden-Wellenleiters mit mindestens einem Bezugssignal- und mindestens einem Meßkanal ausgeführt, die in Abhängigkeit von der Änderung der Geometrie der Längsachse der langgestreckten Konstruktion zusammenwirken.

Die Einrichtung zur Kontrolle des Zustands einer langgestreckten Konstruktion enthält eine Einheit 7 zur analogen Informationsverarbeitung, die zur Auskopplung eines durch die lange Wellenenergieübertragungsleitung 5 umgewandelten Bezugssignal aus dieser Leitung 5 vorgesehen ist, um die mechanischen Kennwerte des Zustands der langgestreckten Konstruktion 1 zu bestimmen; ferner ein Raumfilter 8, das zur Bildung eines Bezugssignals räumlich-zeitlicher Struktur mit vorgegebener Mode bestimmt und zwischen dem Ausgang der Quelle 4 der modulierten Wellenenergie und der langen Wellenenergieübertragungsleitung 5 geschaltet ist. Das Raumfilter 8 weist Eingänge 9 und 10 auf, während der Bereich der Kopplung des Raumfilters 8 mit der langen Wellenenergieübertragungsleitung 5 durch die Position 11 bezeichnet ist.

Die Einrichtung zur Kontrolle des Zustands einer langgestreckten Konstruktion enthält ein Raumfilter 12, das zur Umwandlung eines vom Ausgang der langen Wellenenergieübertragungsleitung 5 abgenommenen Signals räumlich-zeitlicher Struktur mit vorgegebener Mode in ein zeitabhängiges Signal bestimmt ist. Das Filter 12 ist mit der langen Leitung 5 über einen Bereich 13 verbunden und liegt zwischen der langen Leitung 5 und den Eingängen der Einheit 7 zur analogen Informationsverarbeitung. Das Raumfilter 12 weist Ausgänge 14, 15 auf.

Die Raumfilter 8, 12 sind identisch hergestellt und können bekanntermaßen in Abhängigkeit vom Typ der langen Wellenenergieübertragungsleitung 5 realisiert werden. Für die Leitung 5 in Form eines rechteckigen Wellenleiters unter Benutzung von $H_{10}$-, $H_{20}$-Wellen als Bezugssignal- und Meßkanal stellt das Filter 8 oder 12 eine an den Wellenleiter in Reihe geschaltete 3-dB-Schlitzbrücke (in Fig. nicht gezeigt) dar, deren Zweige an den Wellenleiter über zwei statische Phasenschieber mit einer Differential-Phasenverschiebung von $\pi/2$ angeschlossen sind. Für den sichtbaren Bereich werden die Ausführungsbeispiele und Aufbauprinzipien der Raumfilter von Wellentypen in der Arbeit J. of the optical society of America, N. 60, N. 9, 1980, N.S. Kapany, et al. "Fiber optics. XII. A technique for launching an arbitrary mode on an optical dielectric waveguide". p. 1182 angeführt.

Die Einrichtung zur Kontrolle des Zustands einer langgestreckten Konstruktion enthält außerdem ein Videoterminal 16, welches zur Darstellung der erhaltenen mechanischen Kennwerte bestimmt und dessen Eingang mit dem Ausgang der Einheit 7 zur analogen Informationsverarbeitung elektrisch verbunden ist.

Die Quelle 4 der modulierten Wellenenergie enthält einen Erzeuger 17, dessen Ausgang mit dem Eingang des Raumfilters 8 verbunden ist, einen Modulator 18, dessen Ausgang an den Eingang des Erzeugers 17 angeschlossen ist.

Als Quelle 4 der modulierten Wellenenergie kann ein standardisierter Erzeuger von Schwingungen eines physikalischen Feldes - Laser (Quantengenerator), UHF-Generator (Ultrahochfrequenzgenerator), Erzeuger elastischer Schwingungen - eingesetzt werden.

Die Einheit 7 zur analogen Informationsverarbeitung enthält Synchrondetektoren 19, 20, deren erste Eingänge mit dem jeweiligen Ausgängen 14, 15 des Raumfilters 12 gekoppelt sind, einen Integrator 21, einen Operationsverstärker 22, dessen erster Eingang an den Ausgang des Integrators 21 angelegt und dessen Ausgang mit dem Eingang des Videoterminals 16 elektrisch verbunden ist, wobei der Eingang des Integrators 21 an den Ausgang des Synchrondetektors 20 angeschaltet, der zweite Eingang des Operationsverstärkers 22 mit dem Ausgang des Synchrondetektors 19 gekoppelt ist, einen Überlagerer 23, dessen Ausgang mit den zweiten Eingängen der Synchrondetektoren 19, 20 verbunden ist.

Die Einrichtung zur Kontrolle des Zustands einer langgestreckten Konstruktion enthält einen Richtkoppler 24, der zur Synchronisierung des Überlagerers 23 vorgesehen ist. Der Ausgang des Richtkoppelers 24 ist mit dem Eingang des Überlagerers 23 verbunden. Jede Kopplung des Raumfilters 12 mit den Synchrondetektoren 19, 20 ist an einen geerdeten Schirm 25 gelegt.

Die Einrichtung zur Kontrolle des Zustands einer langgestreckten Konstruktion enthält einen ADW 26, dessen Eingang an den Ausgang der Einheit 7 zur analogen Informationsverarbeitung angeschaltet ist, einen Mikroprozessor 27, dessen Eingang mit dem Ausgang des ADW verbunden und dessen Ausgang an den Eingang des Videoterminals 16 gekoppelt ist.

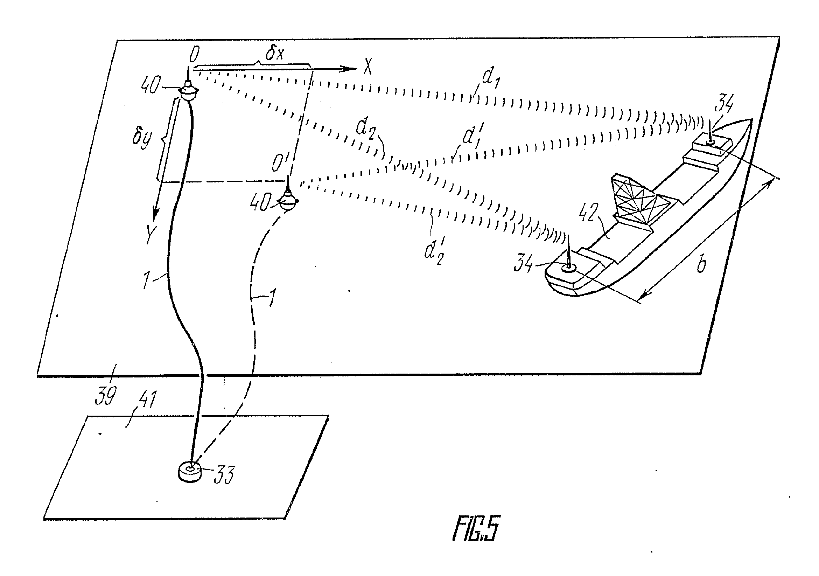

Zur Fernkontrolle des Zustands einer langgestreckten Konstruktion enthält die erfindungsgemäße Einrichtung mindestens einen Sendeempfangskanal für Informationen über die Werte der Krümmung und Torsion der Längsachse 6 der langgestreckten Konstruktion zur Verbindung eines wahlfreien Punktes $B_1$ oder $B_2$ der Längsachse 6 dieser Konstruktion mit einem außerhalb der erfindungsgemäßen Einrichtung und der langgestreckten Konstruktion liegenden Fernkontrollpunkt, wobei der genannte Kanal eine erste Antenne 31 und eine Reihenschaltung von einem Sender 28 (Fig. 4), einem Sende-Empfangs-Umschalter 29 und einem Auslöser 30 aufweist, dessen Ausgang an den Eingang der Quelle 4 der modulierten Wellenenergie geschaltet ist. Sender 28, Sende-Empfangs-Umschalter 29, Auslöser 30, Quelle 4 der modulierten Wellenenergie, Einheit 7 zur analogen Informationsverarbeitung, Raumfilter 8 und 12 gehören zu einer Kontrollvorrichtung 32, die in unmittelbarer Nähe an einem Ende der langgestreckten Konstruktion 1 angeordnet ist, deren anderes Ende mit Hilfe einer Last 33 starr befestigt ist.

Mindestens ein Sendeempfangskanal für Informationen enthält außerdem eine zweite Antenne 34 und eine Reihenschaltung von einem ersten Sender 35, einem ersten Sende-Empfangs-Umschalter 36, einem ersten Empfänger 37, dessen Ausgang an den Eingang des ADW 26 angelegt ist, wobei der Eingang-Ausgang des Sende-Empfangs-Umschalters 36 mit der zweiten Antenne 34 gekoppelt ist. ADW 26, Mikroprozessor 27, Videoterminal 16, erster Sender 35, erster Sende-Empfangs-Umschalter 36 und erster Empfänger 37 gehören zu einer Zentrale 38 für Nachrichtenverbindung, digitale Informationsverarbeitung und -darstellung. Diese Zentrale 38 ist vom Kontrollobjekt - der langgestreckten Konstruktion 1 entfernt und in einer Zone angeordnet, woher die Fernkontrolle durchgeführt wird.

Es kann auch ein weiterer Sende-Empfangs-Kanal für Informationen vorhanden sein, der einen Sender 28, Sende-Empfangs-Umschalter 29, einen Auslöser 30, eine Antenne 31 sowie eine dritte Antenne 34 und eine Reihenschaltung von einem zweiten Sender 35, einem zweiten Sende-Empfangs-Umschalter 36, einem zweiten Empfänger 37 umfaßt, dessen Ausgang an den Eingang des ADW 26 angeschlossen ist, wobei der Eingang-Ausgang des zweiten Sende-Empfangs-Umschalters 36 mit der dritten Antenne 34 verbunden ist. Zweite Antenne 34, zweiter Sender 35, zweiter Sende-Empfangs-Umschalter 36, zweiter Empfänger 37 gehören auch zur Zentrale 38 für Nachrichtenverbindung. Der Abstand zwischen der zweiten und der dritten Antenne 34 entspricht einer Meßbasis b.

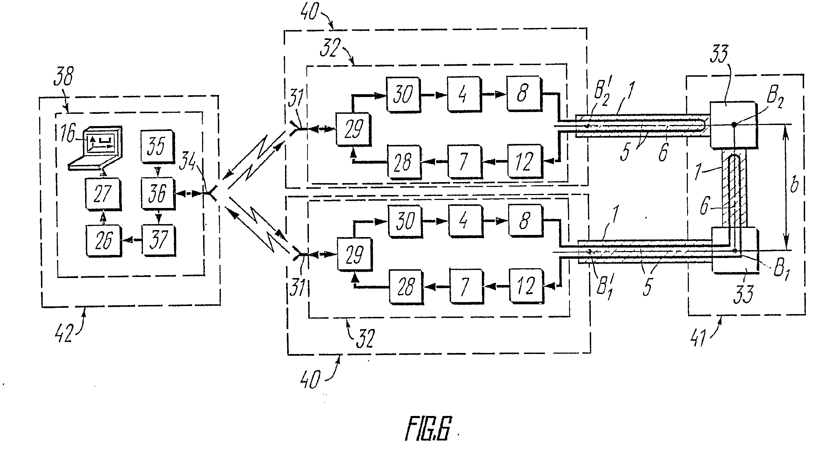

Die Fernkontrolle des Zustands einer langgestreckten Konstruktion 1 (Fig. 5), beispielsweise eines Seiles, dessen oberes Ende auf der Wasseroberfläche 39 mit Hilfe einer Boje 40 gehalten wird und dessen unteres Ende auf der Bodenfläche 41 mittels einer Last - eines massiven Ankers 33 - befestigt ist, kann von einem Schiff 42 aus vorgenommen werden. Auf dem Schiff 42 sind die zweite und die dritte Antenne 34 angeordnet, die die Meßbasis b für die Durchführung der Fernkontrolle des Zustands der langgestreckten Konstruktion 1 von diesem Schiff 42 bilden. Zur Feststellung der gegenseitigen Anordnung der langgestreckten Konstruktion 1 und des Schiffes 42 sind zwischen dem Schiff 42 und der Boje 40 zwei Sendeempfangskanäle für Informationen gebildet. Das System kartesischer Koordinaten XOY, in dem die gegenseitige Anordnung der Boje und des Schiffes 42 bestimmt wird, hat den Koordinatenursprung im Punkt 0, der mit dem Verbindungspunkt der Antenne 31 und der Boje 40 zusammenfällt. Diese gegenseitige Anordnung wird durch ein Paar der Werte $d_1$ und $d_2$ der Abstände zwischen der Antenne der Boje 40 und der ersten bzw. zweiten Antenne 34 des Schiffes 42 charakterisiert. Bei einer Verschiebung der Boje 40 im Raum, deren neue Ortslage durch einen Punkt 0' angedeutet ist, entstehen Änderungen der Geometrie der Oberfläche der langgestreckten Konstruktion 1 (des Seiles) sowie des Paares der Werte $d_1'$ und $d_2'$ der Abstände zwischen dem Punkt O' und der ersten bzw. zweiten Antenne 34 des Schiffes 42. Die Lage des Punktes O im XOY-Koordinatensystem wird durch Koordinatenabweichungen um die Werte von $\sigma x$ und $\sigma y$ in Richtung der OX- und OY-Achse gekennzeichnet.

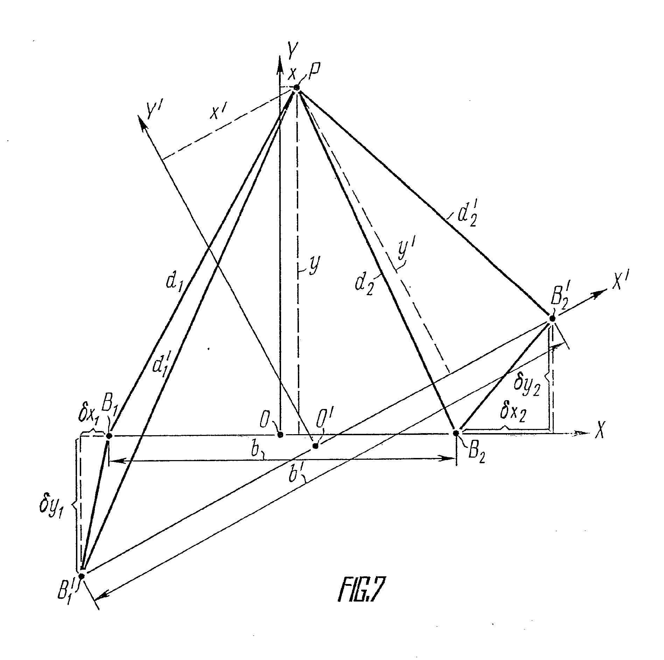

Bei der Fernkontrolle der langgestreckten Konstruktion 1 kann die Meßbasis b auf der Bodenfläche 41 (Fig. 6) geschaffen werden. In diesem Fall ist die ein Seil darstellende langgestreckten Konstruktion 1 beispielsweise im Wassermedium untergebracht. Die beiden Enden dieses Seiles 1 werden auf der Wasseroberfläche mit Hilfe der Bojen 40 gehalten, in deren jeder eine an die eigene Antenne 31 geschaltete Kontrollvorrichtung 32 untergebracht ist.

Jede Kontrollvorrichtung 32 enthält eine Reihenschaltung von Raumfilter 12, Einheit 7 zur analogen Informationsverarbeitung, Sender 28, Sende-Empfangs-Umschalter 29, Auslöser 30, Quelle 4 - modulierter Wellenenergie, Raumfilter 8, dessen Ausgang an den Eingang der langen Wellenenergieübertragungsleitung 5 und der Ausgang der langen Wellenenergieübertragungsleitung 5 an den Eingang des Raumfilters 12 angeschlossen ist.

Die Zentrale 38 für Nachrichtenverbindung, digitale Informationsverarbeitung und - darstellung liegt in diesem Fall in der Zone, von wo aus die Fernkontrolle verwirklicht wird, beispielsweise auf dem Schiff 42, und enthält eine Reihenschaltung von erstem Sender 35, dem ersten Sende-Empfangs-Umschalter 36, dem ersten Empfänger 37, dessen Ausgang mit dem Videoterminal 16 über den ADW 26 verbunden ist, und den Mikroprozessor 27. Die zu kontrollierende langgestreckte Konstruktion 1 ist in drei Abschnitte eingeteilt. Der erste und der zweite Abschnitt sind zwischen die auf der Wasseroberfläche befindlichen Enden des Seiles 1 und die Lasten 33 eingeschlossen, als welche massive Anker verwendet werden können, die auf der Bodenfläche 41 liegen und die Meßbasis b bilden. Der dritte Abschnitt stellt eine zwischen den Lasten 33 eingeschlossene Strecke der langgestreckten Konstruktion 1 dar. An jede Kontrollvorrichtung 32 ist eine eigene lange Wellenenergieübertragungsleitung 5 angelegt, die an der langgestreckten Konstruktion 1 befestigt ist, wobei die eine dieser Leitungen 5 beispielsweise einen Abschnitt und die andere die zwei restlichen Abschnitte kontrolliert.

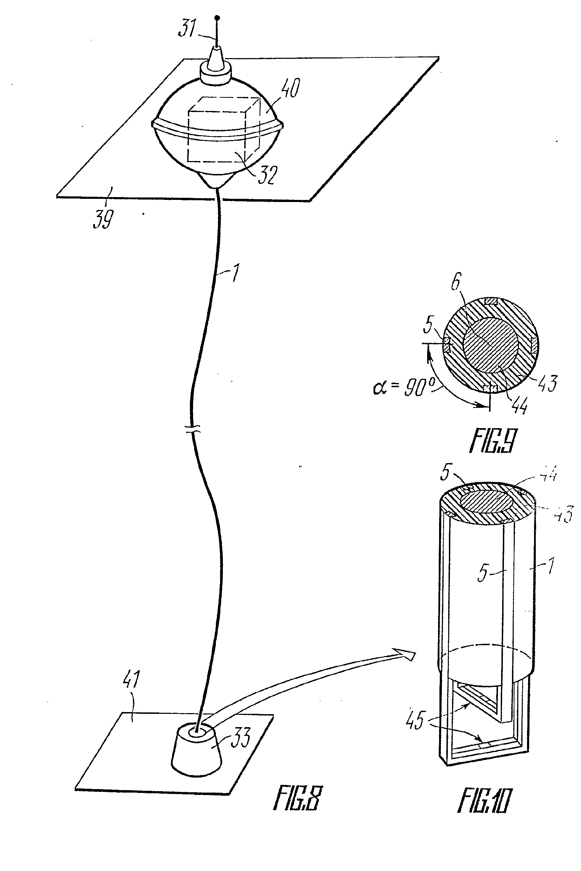

Fig. 7 zeigt eine Zeichnung, die einen geometrischen Aufbau enthält, die die gegenseitige Anordnung von vier vorgegebenen Punkten der Längsachse 6 (Fig. 6) der langgestreckten Konstruktion 1 und von einem Fernkontrollpunkt veranschaulicht. Die zwei Punkte der Längsachse 6 sind in Fig. 7 mit $B_1$, $B_2$ bezeichnet und entsprechen der Lage der Lasten 33 (Fig. 6) auf der Bodenfläche 41, wobei die Entfernung zwischen ihnen die Meßbasis b bildet, deren Mitte O den Ursprung des Systems der kartesischen Koordinaten XOY darstellt, wo die OX-Achse eine Fortsetzung der Meßbasis b ist. Die zwei anderen Punkte $B_1'$ und $B_2'$ der Längsachse 6 (Fig. 6) entsprechen der Lage der auf der Wasseroberfläche 39 befindlichen Bojen 40. Die Punkte $B_1'$ und $B_2'$ bilden eine bewegliche Meßbasis b', deren Mitte O' den Anfangspunkt des Systems der kartesischen Koordinaten X'O'Y' darstellt, wo die O'X'- Achse eine Fortsetzung der Meßbasis b' ist.

Mit dem Punkt P ist in Fig. 7 das Schiff 42 (Fig. 6) bezeichnet, von dem aus die Fernkontrolle verwirklicht wird.

Durch die Strecken $d_1$, $d_2$ und $d_1'$, $d_2'$ sind jeweils die Entfernungen (Abstände) vom Punkt P bis zu den Punkten $B_1$, $B_2$ und $B_1'$, $B_2'$ bezeichnet.

Die Strecken $\delta x_1$, $\delta x_2$, $\delta y_1$ $\delta y_2$ entsprechen den Abweichungen der Koordinaten der Punkte $B_1'$, $B_2'$ im Koordinatensystem XOY.

Die Strecken x, y und x', y' stellen Koordinaten des Punktes P in den Koordinatensystemen XOY bzw. X'O'Y' dar.

In Fig. 8 ist die langgestreckte Konstruktion 1 in Form eines im Wassermedium angeordneten isolierten Seiles dargestellt, in dessen oberem Teil die Boje 40 mit der Kontrollvorrichtung 32 und der Antenne 31 und dessen unterer Teil auf der Bodenfläche 41 mittels der Last 33 befestigt ist.

Fig. 9 zeigt einen Querschnitt des Seiles 1 (Fig. 8) in vergrößertem Maßstab. Die lange Wellenenergieübertragungsleitung 5 ist in einer zylindrischen Schutzhülle 43 in Richtung von deren vier Mantellinien angeordnet. Innerhalb der Hülle 43 sind Tragkabeladern 44 des Seiles 1 untergebracht.

In Fig. 10 ist ein Teil der langgestreckten Konstruktion 1 - des in Fig. 8 dargestellten Seiles - im Bereich seiner Ankopplung an die Last 33 wiedergegeben. Die lange Wellenenergieübertragungsleitung 5 ist in der zylindrischen Hülle 43 untergebracht und bildet im Unterteil des Seiles 1 Schleifen 45.

Die Einrichtung zur Kontrolle des Zustands einer langgestreckten Konstruktion arbeitet wie folgt. Als den Zustand der langgestreckten Konstruktion 1 (Fig. 3) charakterisierender Kontrollparameter ist im vorliegenden Ausführungsbeispiel eine alternierende Verteilung der drei Mantellinien der Oberfläche der langgestreckten Konstruktion 1 in Richtung der vorgegebenen Bogenkoordinate S gewählt. Mit der langgestreckten Konstruktion 1 ist die lange Wellenenergieübertragungsleitung 5 starr verbunden, in der bei Biegungen der langgestreckten Konstruktion 1 Wellenvorgänge angeregt werden.

Am Anfang der Kontrolle erzeugt der Modulator 18 eine Folge von die Schwingungen des Erzeugers 17 modulierenden Impulsen. Die Dauer und die Periode der Modulationsimpulse richten sich nach den erforderlichen Kontrollparametern - der Kontrolldynamik und ihrer Auflösung - sowie nach den Parametern der langen Wellenenergieübertragungsleitung 5. Am Ausgang des Erzeugers 17 wird eine Impulsfolge kohärenter Schwingungen beispielsweise eines elektromagnetischen UHF-Feldes geformt. Diese Folge der kohärenten Schwingungen erreicht den Eingang des Raumfilters 8. In diesem Filter 8 wird die räumliche Struktur des UHF-Felders in der Weise umgeformt, daß im Bereich 11 diese Struktur der erforderlichen Struktur von Feldern der Moden des gewählten Bezugssignalkanals der langen Leitung 5 entspricht. Auf solche Weise wird also das Bezugssignal gebildet und auf die Leitung 5 gegeben. Indem sich dieses Signal über den Bezugssignalkanal ausbreitet, erregt es an den Stellen der Biegung der langen Wellenenergieübertragungsleitung 5 Impulse im Meßkanal, die ein mit dem Bezugssignal kohärentes Meßsignal bilden. Diese Impulse pflanzen sich über den Meßkanal mit einer von der Ausbreitungsgeschwindigkeit des Bezugssignals verschiedenen Geschwindigkeit fort.

Indem die UHF-Felder der Moden des Bezugs- und des Meßsignals den Bereich 13 passieren, werden sie mit Hilfe des Filters 12 räumlich getrennt und gelangen zu seinen Ausgängen 14, 15 für die Wellenenergie der Felder. Diese Ausgänge 14, 15 sind mit den Eingängen der Einheit 7 zur analogen Informationsverarbeitung verbunden. In dieser Weise gelangen das Meß- und das Bezugssignal in die Einheit 7. Dann trifft das Meßsignal am ersten Eingang des Synchrondetektors 19 und das Bezugssignal am Eingang des Richtkopplers 24, der einen geringen Teil der Energie des Bezugssignals für die Synchronisierung des Überlagerers 23 abzweigt, ein. Gleichzeitig wird auf die zweiten Eingänge der Synchrondetektoren 19 und 20 ein Signal vom Überlagerer 23 in Form eines mit dem Bezugssignal kohärenten UHF-Feldes gegeben, wodurch die UHF-Felder (unter Beibehaltung des Vorzeichens der Umhüllenden der UHF-Impulse des Meßsignals) synchron detektiert werden. An den Ausgängen der Synchrondetektoren 19 und 20 treten also elektrische Signale auf. Hierbei ist das Signal am Ausgang des Synchrodetektors 20 proportional zur Umhüllenden des Bezugssignals und das Signal am Ausgang des Synchrondetektors 19 unter Berücksichtigung des Vorzeichens zur Umhüllenden des Meßsignals, das seinerseits eine Abbildung der Verteilung von Inkrementen der Krümmung der Mantellinien der Oberfläche der langgestreckten Konstruktion 1 darstellt.

Die elektrischen Impulse des Bezugssignals vom Ausgang des Synchrondetektors 20 kommen am Eingang des Integrators 21 an, an dessen Ausgang ein elektrisches Signal erzeugt wird, das der Amplitude des Eingangsimpulssignals entspricht. Das Signal der Integralamplitude wird vom Integrator 21 dem ersten Eingang des Operationsverstärkers 22 zugeführt. Dem zweiten Eingang des Operationsverstärkers 22 wird das Signal vom Ausgang des Synchrondetektors 19 zugeführt. Am Ausgang des Operationsverstärkers 22 wird ein elektrisches Signal abgenommen, dessen Wert nur durch den Wert des Integrals der Inkremente der Krümmung der drei Mantellinien der Oberfläche der langgestreckten Konstruktion 1 bestimmt wird und von den Werten des Bezugssignals am Eingang 9 des Raumfilters 8 und am Ausgang 15 des Raumfilters 12 nicht abhängt. Das elektrische Signal vom Ausgang des Operationsverstärkers 22, das der Verteilung der Krümmung der drei Mantellinien der Oberfläche der langgestreckten Konstruktion 1 entspricht und als Ausgangssignal der Einheit 7 zur analogen Informationsverarbeitung auftritt, wird mit Hilfe des ADW 26 in einen Digitalkode umgesetzt und gelangt auf den Eingang des Mikroprozessors 27. Dieser Kode wird gemäß den Ausdrücken (14),(15),(18) verarbeitet, und nach den erhaltenen Werten der Krümmung und Torsion der Längsachse 6 der langgestreckten Konstruktion 1 werden die Lagen der Punkte $B_1$ und $B_2$ dieser Achse 6 bestimmt, die beispielsweise den Maximalwerten des Biege- und Verdrehmoments entsprechen, die anhand der bekannten Biege-und Verdrehungssteifigkeit der Konstruktion errechnet werden. Die erhaltenen Angaben über die Form, räumliche Lage der Längsachse 6 der langgestreckten Konstruktion 1 und die Stellen der Entstehung der maximalen Momente der Innenbelastungen gelangen vom Ausgang des Mikroprozessors 27 auf den Eingang des Videoterminals 16, um in grafischer oder alphanumerischer Form dargestellt zu werden.

Das erfindungsgemäße Verfahren zur Kontrolle des Zustands einer langgestreckten Konstruktion und die Einrichtung für dessen Durchführung gestatten es also, Werte der Krümmung und Torsion der Längsachse der langgestreckten Konstruktion selektiv zu erhalten und auf Grund dessen Koordinaten von gewählten Punkten der Längsachse zu bestimmen, was seinerseits die Möglichkeit gibt, die Genauigkeit der Kontrolle der langgestreckten Konstruktionen wesentlich zu erhöhen, die räumliche Verformungen unter der Wirkung von Außenbelastungen erfahren.

Die Notwendigkeit, die lange Wellenenergieübertragungsleitung 5 in Richtung der Mantellinien der Oberfläche der langgestreckten Konstruktion 1 in durch die Längsachse 6 dieser Konstruktion 1 durchgehenden und gleiche Raumwinkel $\alpha$ bildenden Ebenen anzuordnen, ist durch den festgestellten Zusammenhang (14), (15) und (18) zwischen der Geometrie der Mantellinien und der Längsachse 6 der langgestreckten Konstruktion 1 im Raum bedingt. Die Verletzung dieser Bedingung führt zu einer erheblichen Komplizierung des Algorithmus der Verarbeitung von Informationen über die Krümmung der Mantellinien, um die Krümmung und Torsion der Längsachse 6 zu ermitteln, und zu einer Erniedrigung der Genauigkeit bei der Bestimmung der Geometrie dieser Achse 6 im Raum und der Koordinaten der darauf gewählten Punkte, beispielsweise $B_1$, $B_2$ (Fig. 3).

Um eine Fernkontrolle der langgestreckten Konstruktion 1 zu gewährleisten, wird der beschriebenen Einrichtung zur direkten Kontrolle mindestens ein Sendeempfangskanal hinzugefügt, während eine Reihe von Elementen an einem Ort anzuordnen sind, der von der langgestreckten Konstruktion 1 entfernt liegt und von dem
aus die Fernkontrolle durchgeführt werden wird. Ein
Beispiel einer derartigen Einrichtung ist in Fig. 4 gezeigt,
deren Betrieb wie folgt vor sich geht.

Mit einem durch den ersten Sender 35 der Zentrale 38
im UHF- und sichtbaren Wellenbereich erzeugten Signal,
das über den ersten Sende-Empfangs-Umschalter 36 und die
zweite Antenne 34 übertragen wird, wird durch das aufgenommene Signal die erste Antenne 31 erregt, von der
über den Umschalter 29 der Auslöser 30 betätigt wird, der
an die Quelle 4 der modulierten Wellenenergie angeschlossen ist. Diese Quelle 4 erzeugt im UHF- oder sichtbaren
Bereich auch Raumwellen, die über das Raumfilter 8 den
Bezugssignalkanal der langen Leitung 5 aktivieren (in
Fig 4 ist zur Vereinfachung der Figur die längs
zwei er Mantellinien der Konstruktion 1 fixierte Leitung
5 gezeigt). Bei Eintreffen einer Information am Eingang
der Einheit 7 zur analogen Informationsverarbeitung vom
Ausgang der langen Leitung 5 über das Raumfilter 12 wird
am Ausgang der Einheit 7 ein elektrisches Signal erzeugt,
das der Krümmung der Mantellinien der Oberfläche der langgestreckten Konstruktion 1 proportional ist. Dieses durch
den Sender 28 verstärkte und zur Fortpflanzung über das
Luftmedium bereitgestellte Signal wird mit Hilfe des
Umschalters 29 der ersten Antenne 31 zugeführt und auf
die zweite Antenne 34 der Zentrale 38 gegeben. Nach dem
Durchgang durch den ersten Umschalter 36 und den ersten
Empfänger 37 wird die Information durch den Mikroprozessor 27 verarbeitet, nachdem sie im ADW 26 in einen Digitalkode umgesetzt worden ist. Dann wird nach der Entfernung und Peilung die Lage der zweiten Antenne 34 der
Zentrale 38 relativ zur ersten Antenne 1 bestimmt.

Nach der Erhaltung der Information über die gegen-

seitige Anordnung der ersten 31 und der zweiten Antenne 34 wird diese Information samt der Digitalinformation über die Krümmung der Mantellinien der langgestreckten Konstruktion 1 vom Ausgang des ADW 26 mit Hilfe des Mikroprozessors 27 verarbeitet, um die Geometrie der Längsachse 6 dieser Konstruktion 1 in bezug auf die zweite Antenne 34 der Zentrale 38 zu bestimmen. Zum Aufbau einer Meßbasis in der Zone, von der aus die Fernkontrolle durchgeführt wird, steht eine dritte Antenne 34 zur Verfügung, und in der Zentrale 38 sind zweiter Sender 35, zweiter Sende-Empfangs-Umschalter 3, zweiter Empfänger 37 untergebracht, die identisch zu den ersten analogen Bauelementen arbeiten. In diesem Fall wird bei Kenntnis der Entfernung zwischen der zweiten und der dritten Antenne 34 (Meßbasis b) eine genauere und sicherere Bestimmung der gegenseitigen Anordnung der Zentrale 38 und der Kontrollvorrichtung 32 erreicht. Dies ist von besonderer Tragweite bei der Anordnung der Zentrale 38 auf einem beweglichen Objekt, beispielsweise auf dem Schiff 42 (Fig. 5), wobei als langgestreckte Konstruktion 1 ein Seil in Frage kommt, das mit Hilfe der Last 33 verankert ist, die auf der Bodenfläche 41 liegt, während das obere Ende des Seiles 1 auf der Wasseroberfläche 39 durch die Boje 40 samt der Kontrollvorrichtung 32 (Fig. 4) und der Antenne 31 gehalten wird. In diesem Fall ist die Bestimmung der Ortslage des Schiffes 42 (fig. 5) in bezug auf den unteren Punkt des Seiles 1 möglich, der auf der Bodenfläche 41 liegt, weshalb im vorliegenden Koordinatensystem die Geometrie der Längsachse 6 des Seiles 1 und die Lage des Schiffes kontrolliert werden. Infolge der Einwirkung des Hydrometeomediums ändert die Boje 40 ihre Lage (Position $O'$ in Fig. 5), die im Unterschied zu der durch die Entfernungen $d_1$, $d_2$ definierten ursprünglichen Lage (Position $O$) durch die Entfernungen $d_1'$ und $d_2'$ bestimmt wird. Diese Verschiebung wird im Koordinatensystem XOY auch durch die Abweichungen $\delta_x$ und $\delta_y$ der Koordinaten ge-

kennzeichnet. Für moderne Schiffe, deren Länge 100 m häufig überschreitet, kann die Meßbasis b bei solch einer Abmessung eine hohe Genauigkeit der Bestimmung der Lage der Boje 40 bezüglich des Schiffes 42 und folglich auch der Fernkontrolle des Seiles 1 von diesem Schiff 42 aus gewährleisten.

Mit Hilfe der in Fig. 4 gezeigten Einrichtung kann also die Fernkontrolle der langgstreckten Konstruktion 1 aus mindestens einem beliebigen von dieser Konstruktion entfernt liegenden Fernkontrollpunkt bei der Bestimmung der Lage dieses Fernkontrollpunktes in bezug auf mindestens einen Punkt der Längsachse 6 der langgestreckten Konstruktion 1 vorgenommen werden. Hierbei werden die Informationen über die Werte der Krümmung und Torsion der Längsachse 6 dieser Konstruktion 1 an den Fernkontrollpunkt vermittelt.

Die in Fig. 6 dargestellte Einrichtung arbeitet im wesentlichen in Analogie zu der in Fig. 4 dargestellten Einrichtung. Der Unterschied besteht darin, daß mit Hilfe der langen Wellenenergieübertragungsleitung 5, die auf dem zwischen den Lasten 33 liegenden Abschnitt der Oberfläche der Seiles 1 befestigt ist, der Abstand zwischen diesen Lasten 33 ermittelt wird, der eine durch die zwei Punkte $B_1$, $B_2$ der Längsachse 6 der langgestreckten Konstruktion 1 gebildete unbewegliche Meßbasis b darstellt. Die Arbeit dieser Einrichtung wird durch die in Fig. 7 dargestellte Zeichnung veranschaulicht. Die Ausgangslage des Schiffes 42 (Fig. 6) ist in Fig. 7 durch den Punkt P, die Lagen der Lasten 33 (Fig. 6) auf der Bodenfläche 41 sind durch die Punkte $B_1$ (Fig. 7) und $B_2$ und die der Bojen 40 (Fig. 6) durch die Punkte $B_1'$ (Fig. 7), $B_2'$ angedeutet. Der Anfangspunkt O des (horizontalen) Systems der ebenen kartesischen Koordinaten XOY ist in die Mitte der Meßbasis b zwischen den Punkten $B_1$ und $B_2$ gebracht. Die OX-Achse ist senkrecht zur Linie $B_1B_2$ und die OX-Achse längs der Basis b nach rechts gerichtet.

Der Punkt P ist durch Geradenstücke mit den Punkten $B_1$ und $B_2$ verbunden, und die zwei erhaltenen Entfernungen $d_1$ und $d_2$ bestimmen die Lage des Schiffes 42 im genannten Koordinatensystem. Dann ist

$$d = (d_1 + d_2), \quad \Delta = d_1 - d_2$$

Im System der kartesischen Koordinaten XOY wird die Lage des Schiffes 42 (Punkt P in Fig. 7) für die Summen-Differenz-Fernmessung in bekannter Weise ermittelt:

$$x = \frac{\Delta \cdot d}{4b} \; ; \; y = 1/2 \; \sqrt{d^2 + (\Delta/2)^2 - (b/2)^2 - (\Delta \cdot d/4b)^2} \quad (19)$$

Unter den realen Bedingungen werden auf dem Schiff 42 die Entfernungen $d_1'$ und $d_2'$ von den Bojen 40 ($B_1'$ bzw. $B_2'$), die durch die Parameter

$$d' = (d_1' + d_2')/2, \quad \Delta' = d'_1 - d'_2$$

charakterisiert werden, und die Abweichungen der Bojen 40 von den Lasten 33, die in Fig. 7 jeweils durch $\delta x_1$, $\delta x_2$, $\delta y_1$, $\delta y_2$ bezeichnet sind, ermittelt.

Auf Grund der trigonometrischen Beziehungen und der Bedingung $b \gg \delta x_{1,2}$, $\delta y_{1,2}$ (die in der Praxis leicht erfüllt wird) wird auf dem Schiff 42 (Fig. 6) der Momentanwert der neuen beweglichen Basis $b'$ (Fig. 7)

$$b' = \sqrt{(b + \delta x_2 - \delta x_1)^2 + (\delta y_2 - \delta y_1)^2}$$

bestimmt, während die Momentankoordinaten des Punktes P - des Schiffes 42 (Fig. 6) - in dem beweglichen Koordinatensystem X'O'Y', dessen Ursprung O' in der Mitte der durch die Punkte $B_1'$ und $B_2'$ gebildeten Basis $b'$ plaziert ist, aus den Ausdrücken

$$x' = \frac{\Delta' d'}{4b'} \; , \; y' = 1/2 \sqrt{(d')^2 - (\Delta'/2)^2 - (b'/2)^2 - (\Delta' d'/4b'')^2}$$

ermittelt werden.

Dann werden endgültig die um die Lage der beweglichen Basis $b'$ korrigierten Parameter $\Delta$ und d

- 40 -

$$\Delta = \Delta' + 2y'\left(\frac{\delta y_1}{2d'+\Delta'} - \frac{\delta y_2}{2d'-\Delta'}\right) + b'\left(\frac{\delta x_1}{2d'+\Delta'} + \frac{\delta x_2}{2d'-\Delta'}\right) +$$

$$x'\left(\frac{\delta x_1}{2d'+\Delta'} - \frac{\delta x_2}{2d'-\Delta'}\right), \quad d = d' + 2y'\left(\frac{\delta y_1}{2d'+\Delta'} + \frac{\delta y_2}{2d'-\Delta'}\right)+$$

$$+ b'\left(\frac{\delta x_1}{2d'+\Delta'} - \frac{\delta x_2}{2d'-\Delta'}\right) + x'\left(\frac{\delta x_1}{2d'+\Delta'} - \frac{\delta x_2}{2d'-\Delta'}\right)$$

und ausgehend vom Ausdruck (19) die Koordinatenwerte von x und y ermittelt.

Auf solche Weise wird die Lage des Fernkontrollpunktes P in bezug auf die zwei gewählten Punkte $B_1$, $B_2$ der Längsachse 6 der langgestreckten Konstruktion 1 ermittelt, deren Entfernung voneinander eine betragsmäßig konstante oder variable Meßbasis b darstellt. Der Aufbau dieser Basis b erlaubt es, die gegenseitige Anordnung des Fernkontrollpunktes und der langgestreckten Konstruktion in einfachster und sicherster Weise zu bestimmen.

Im Zusammenhang mit umfangreichen praktischen Erfahrungen im Entwerfen und Betreiben der verankerten Seebojen 40 (Fig. 8) ist es zweckmäßig, die lange Wellenenergieübertragungsleitung 5 auf der Oberfläche der langgestreckten Konstruktion 1, hier des Seiles, in einer zylindrischen Schutzhülle 43 (Fig. 9) anzuordnen. Diese Hülle schützt die Tragkabeladern 44 des Seiles 1 aus Stahl gegen die Korrosion und fixiert die lange Wellenenergieübertragungsleitung 5 auf deren Oberfläche in Richtung von vier unter einem Winkel $\alpha = 90^\circ$ angeordneten Mantellinien. Die vier Mantellinien sind in diesem Fall gewählt, damit sich der Ein- und Ausgang der langen Wellenenergieübertragungsleitung 5 (Fig. 10) im oberen Teil des Seiles 1 auf der Wasseroberfläche 39 (Fig. 8) befinden. Dies gestattet es, die Kontrollvorrichtung 32 (Fig. 4) auch auf der Wasseroberfläche 39 in der Boje 40 (Fig. 8) zu plazieren und die erforderliche Herstellung von aufwendigen speziellen Behältern und radioelektronischen Tiefwassergeräten zu vermeiden. Durch Organisierung der Schleifen 45 (Fig. 10) an der Stelle der Befestigung der Last 33 am Seil 1 (Fig. 8) werden absichtlich beträchtliche Änderungen des durch die lange Wellenenergieübertragungsleitung 5 gemessenen Krümmungswertes vorgenommen, die zur Eichung dieser Leitung 5 und zur Erleichterung der Messungen herangezogen werden.

Das Verfahren und die Einrichtung zur Kontrolle des Zustands einer langgestreckten Konstruktion gestatteten es somit, die Genauigkeit der Kontrolle des Zustands der langgestreckten Konstruktion in einem dreidimensionalen Raum unter der Einwirkung von Außenbelastungen zu erhöhen und gleichzeitig die Koordinaten beliebiger gewählter Punkte der Längsachse dieser Konstruktion zu bestimmen.

Gewerbliche Anwendbarkeit

Die Erfindung kann auf verschiedenen Gebieten der Technik und der industriellen Produktion verwendet werden, wo langgestreckte Konstruktionen mit einer zylindrischen Oberflächenform eigesetzt werden und wo es gilt, die Geometrie dieser Oberfläche oder der Längsachse der Konstruktion im Raum unter einer selektiven Ermittlung der Krümmung und der Torsion der Längsachse für eine auschließende Bestimmung der Koordinaten von gewählten Punkten der Längsachse und für eine gleichzeitige Bewertung des gespannten und verformten Zustands dieser Konstruktion zu überwachen.

Besonders zweckmäßig ist die Anwendung der vorliegenden Erfindung

- in Komplexen zur Erkundung und Gewinnung von Bodenschätzen in Unterwasserlagerstätten, zur Kontrolle und Bestimmung der räumlichen Lage von Schleppkabeln bzw. -seilen, Förderleitungen, wassersperrenden Bohrsäulen, Ankerleitungen, Lebensversorgungsleitungen für Taucher;

- bei der geologischen Erkundung übertage zur Kontrolle des Zustands und zur Bestimmung der räumlichen Lage von Informations-Meßkabeln, Bohrsäulen, flexiblen Schläuchen sowie zur Bestimmung der Geometrie von Bohrlöchern, zur Durchführung eines Aufschlußbaues und eines Richtbohrens;

- im Bauwesen, der Erdöl- und Erdgasindustrie zur Kontrolle und Vorhersage des gespannten und verformten Zustands von Förderleitungen, Kreuzungsbauwerken, Tragsäulen und Mastkonstruktionen;

- in der Flugzeug- und Raumfahrttechnik zur Kontrolle des Zustands von Schläuchen zum Umpumpen von gesförmigen und flüssigen Stoffen sowie zur Bestimmung der gegenseitigen räumlichen Anordnung von mechanisch gekoppelten Objekten im Vorgang der Kopplung oder einer entfernt wirkenden Überlastung.

PATENTANSPRÜCHE:

1. Verfahren zur Kontrolle des Zustands einer langgestreckten Konstruktion, darin bestehend, daß man eine lange Wellenenergieübertragungsleitung (5) wählt, die eine Fortpflanzung von Signalen in Form von Moden mit bekannter räumlich-zeitlicher Struktur physikalischer Felder gewährleistet, die gewählte lange Wellenenergieübertragungsleitung (5) auf der Oberfläche längs der Längsachse (6) der langgestreckten Konstruktion (1) in Richtung der vorgegebenen Koordinate (S) anordnet, auf der langen Wellenenergieübertragungsleitung (5) mindestens einen Bezugssignalkanal und mindestens einen Meßkanal mit bekannten Verzögerungen von Phasengeschwindigkeiten der Moden in jedem dieser Kanäle auswählt, eine gerichtete Wechselwirkung von Feldern der Moden mindestens eines Bezugssignalkanals und mindestens eines Meßkanals entlang der langen Wellenenergieübertragungsleitung (5) in Abhängigkeit von der Änderung der Geometrie der Oberfläche der langgestreckten Konstruktion (1) sichert, um im Meßkanal ein Signal zu erzeugen, das sich im Vorgang der Ausbreitung des Signals über den Bezugssignalkanal entsprechend der Änderung der Geometrie der Oberfläche der langgestreckten Konstruktion (1) ändert, die den Zustand dieser Konstruktion (1) charakterisiert, ein zeitlich moduliertes Signal in Form von Schwingungen physikalischer Felder bildet und diese Schwingungen in ein Signal mit vorgegebener räumlich-zeitlicher Struktur von Feldern der Moden umwandelt, die Felder der Moden an den Ausgängen mindestens eines Bezugssignalkanals und mindestens eines Meßkanals der langen Wellenenergieübertragungsleitung (5) in nur von der Zeit abhängige elektrische Signale umsetzt, die Amplitude des elektrischen Signals am Ausgang des Bezugssignalkanals abtrennt, das elektrische Signal am Ausgang des Meßkanals umgekehrt proportional dem Amplitudenwert des elektrischen Signals am Ausgang des Bezugssignalkanals verstärkt, eine lineare Skalierung verwendet, die die Größe der Differenz der Verzögerungen der Phasengeschwindigkeiten der Moden des Bezugssignal- und des Meßkanals der langen Wellenenergieübertragungsleitung (5) in Verbindung mit der laufenden Zeit der Kontrolle und dem Meßwert der vorgegebenen Koordinate (S) entlang der langen Wellenenergieübertragungsleitung setzt und dann die Geometrie der Oberfläche der langgestreckten Konstruktion bestimmt, d a d u r c h g e - k e n n z e i c h n e t, daß man die gerichtete Wechselwirkung von Feldern der Moden mindestens eines Bezugssignal- und mindestens eines Meßkanals entlang der langen Wellenenergieübertragungsleitung (5) in Abhängigkeit vom Wert der Krümmung der Oberfläche der langgestreckten Konstruktion (1) sichert und die lange Wellenenergieübertragungsleitung (5) auf der Oberfläche der langgestreckten Konstruktion (1) in Richtung wenigstens dreier Mantellinien anordnet und befestigt, auf Grund der Ausgangssignale von mindestens einem Bezugssignal- und mindestens einem Meßkanal der langen Wellenenergieübertragungsleitung (5) Werte der Krümmung wenigstens der drei Mantellinien der Oberfläche der langgestreckten Konstruktion (1) ermittelt, anhand der erhaltenen Werte der Krümmung wenigstens der drei Mantellinien der Oberfläche der langgestreckten Konstruktion (1) Werte der Krümmung und Torsion der Längsachse (6) der langgestreckten Konstruktion (1) errechnet und anhand der gewonnenen Werte der Krümmung und Torsion der Längsachse (6) der langgestreckten Konstruktion (1) Koordinaten der gewählten Punkte ($B_1$, $B_2$) der Längsachse (6) der langgestreckten Konstruktion (1) bestimmt.

2. Verfahren zur Kontrolle des Zustands einer langgestreckten Konstruktion nach Anspruch 1, d a d u r c h g e k e n n z e i c h n e t, daß man auf Grund der gewon-

nenen Werte der Krümmung und Torsion der Längsachse
(6) der langgestreckten Konstruktion (1) Verteilungen
innerer Belastungen über die Länsachse (6) der langgestreckten Konstruktion (1) die den gespannten und verformten Zustand dieser Konstruktion (1) charakterisieren,
bestimmt.

3. Verfahren zur Kontrolle des Zustands einer langgestreckten Konstruktion nach dem Anspruch 1 oder 2,
d a d u r c h   g e k e n n z e i c h n e t, daß man
zur Durchführung einer Fernkontrolle aus mindestens einem beliebigen von dieser Konstruktion (1) entfernt liegenden Fernkontrollpunkt (P) die Lage dieses Fernkontrollpunktes (P) in bezug auf mindestens einen Punkt (B$_1$)
der Längsachse (6) der langgestreckten Konstruktion (1)
bestimmt und die Informationen über die Werte der Krümmung und der Torsion der Längsachse (6) der langgestreckten Konstruktion (1) an den Fernkontrollpunkt (P) vermittelt.

4. Einrichtung zur Durchführung des Verfahrens nach
den Ansprüchen 1 bis 3, die eine Quelle     modulierter
Wellenenergie, die zur Bildung eines sich räumlich  und
zeitlich ändernden Bezugssignals bestimmt und in Form
einer Reihenschaltung von einem Modulator (17) und einem
Erzeuger (18) der Wellenenergie physikalischer Felder
ausgeführt ist, eine lange Wellenenergieübertragungsleitung (5), die auf der Oberfläche der langgestreckten
Konstruktion nach der vorgegebenen Koordinate (S) angeordnet, zur Erfassung und Übertragung von  Informationen
über Änderungen der Geometrie der Oberfläche der langgestreckten Konstruktion (1) vorgesehen, mit dem Ausgang
der Quelle (4) der modulierten Wellenlänge verbunden und
in Form eines Vielmoden-Wellenleiters mit mindestens
einem Bezugssignal- und mindestens einem Meßkanal ausgeführt ist, die miteinander zusammenwirken und deren
Kopplung   von der Änderung der Geometrie der Oberfläche der langgestreckten Konstruktion (1) abhängt, eine

- 46 -

Einheit (7) zur analogen Informationsverarbeitung, die zur Bestimmung der Geometrie der Oberfläche der langgestreckten Konstruktion (1) unter Benutzung der Ausgangssignale vom mindestens einem Bezugssignal- und mindestens einem Meßkanal vorgesehen, mit den Ausgängen dieser Kanäle der langen Wellenenergieübertragungsleitung verbunden ist, ein zur Abbildung der Geometrie der Oberfläche der langgestreckten Konstruktion (1) bestimmtes Videoterminal (16), dessen Eingang mit dem Ausgang der Einheit zur analogen Informationsverarbeitung elektrisch gekoppelt ist, ein Raumfilter (8), das zur Erzeugung eines modulierten Signals vom Bezugssignalkanal mit vorgegebener räumlich-zeitlicher Struktur von Feldern der Moden bestimmt und zwischen dem Ausgang der Quelle der modulierten Wellenenergie physikalischer Felder und der langen Wellenenergieübertragungsleitung (5) geschaltet ist, ein Raumfilter (12) aufweist, das zur räumlichen Trennung von Feldern der Moden mindestens eines durch ein Bezugssignal aktivierten Bezugssignalkanals und von Feldern der Moden mindestens eines Meßkanals, der durch eine von der Änderung der Geometrie der Oberfläche der langgestreckten Konstruktion (1) abhängige Kopplung zwischen den Kanälen aktiviert wird, vorgesehen und zwischen den Ausgängen der langen Wellenenergieübertragungsleitung (5) und den Eingängen der Einheit (7) zur analogen Informationsverarbeitung angeordnet ist, wobei der Eingang und der Ausgang mindestens eines Bezugssignalkanals als erster Eingang bzw. erster Ausgang für die Wellenenergie der Felder des Raumfilters (8 bzw. 12) auftreten, der Eingang und der Ausgang mindestens eines Meßkanals als zweiter Eingang bzw. zweiter Ausgang für die Wellenenergie der Felder der Raumfilters (8, 12) fungieren, d a d u r c h  g e - k e n n z e i c h n e t, daß sie einen Analog-Digital-Wandler (ADW) (26), einen Mikroprozessor (27) enthält, dessen Eingang mit dem Ausgang des ADW (26) verbunden ist, dessen Eingang mit dem Ausgang der Einheit (7) zur analogen Informationsbearbeitung gekoppelt ist, wobei der Ausgang des Mikroprozessors (27) an den Eingang des Videoterminals (16) angeschlossen und die lange Wellenenergieübertragungsleitung (5) auf der Oberfläche der langgestreckten Konstruktion (1) in Richtung von wenigstens drei Mantellinien der Oberfläche dieser Konstruktion (1) befestigt ist, die jeweils in Ebenen liegen, die durch die Längsachse (6) der langgestreckten Konstruktion (1) durchgehen und gleiche Raumwinkel ($\alpha$) bilden.

5. Einrichtung zur Kontrolle des Zustands einer langgestreckten Konstruktion nach Anspruch 4, d a d u r c h g e k e n n z e i c h n e t , daß sie mindestens einen Sendeempfangskanal für Informationen über die Werte der Krümmung der wenigstens drei Mantellinien (5) der Oberfläche der langgestreckten Konstruktion (1) aus einem beliebigen Punkt der Längsachse (6) dieser Konstruktion (1), die für einen Fernkontrollpunkt (P) bestimmt sind, enthält, der in unmittelbarer Nähe der langgestreckten Konstruktion (1) angeordnet eine Antenne (31) und eine Kontrollvorrichtung (32), die eine Quelle (4) der modulierten Wellenenergie, eine Einheit (7) zur analogen Informationsverarbeitung, Raumfilter (8, 12), eine Reihenschaltung von einem Sender (28), einem Sende-Empfang-Umschalter (29) und einem Auslöser (30) beinhaltet, dessen Ausgang an den Eingang der Quelle (4) der modulierten Wellenenergie angelegt ist, während der Eingang des Senders (28) mit dem Ausgang der Einheit (7) zur analogen Informationsverarbeitung und der Eingang-Ausgang des Sende-Empfangs-Umschalters (29) mit der Antenne (31) verbunden ist, sowie in einer Entfernung von der langgestreckten Konstruktion (1) angeordnet eine Antenne (34), eine Zentrale (38) für Nachrichtenverbindung, digitale Informationsverarbeitung und -darstellung enthält, die einen ADW (26), einen Mikroprozessor (27), ein Videoterminal (16) und eine Reihenschaltung von einem Sender (35), einem Sende-Empfangs-Umschalter (36), einem Empfänger (37), dessen Ausgang an den Eingang des ADW (26) angeschlossen ist, wobei der Eingang-Ausgang des Sende-Empfangs-Umschalters (36) mit der Antenne (34) gekoppelt ist, aufweist.

FIG.1

FIG.2

FIG.3

FIG.4

FIG.5

FIG.6

FIG.7

FIG.8

$\alpha = 90^0$

FIG.9

FIG.10

# INTERNATIONAL SEARCH REPORT

International Application No PCT/SU 88/00122

## I. CLASSIFICATION OF SUBJECT MATTER (if several classification symbols apply, indicate all) [6]

According to International Patent Classification (IPC) or to both National Classification and IPC

$IPC^4$: G 01 B 15/00, 11/26

## II. FIELDS SEARCHED

### Minimum Documentation Searched [7]

| Classification System | Classification Symbols |
|---|---|
| $IPC^4$: | G 01 B 11/00, 11/26, 11/27, 15/00, 15/04 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 4459022, (UNITED TECHNOLOGIES CORPORATION), 10 July 1984, see column 1 lines 49-54, 63-67, figure 1 | 1-4 |
| A | DE, A1, 2543377, (SIEMENS AG), 7 April 1977, see page 4, lines 3-7 | 1-4 |
| A | JP, B2, 58-24725, 23 May 1983 | 1-4 |
| A | CH, A5, 608098, (VEB CARL ZEISS JENA), 15 December 1978, see claim 1 | 1 |
| A | GB, A, 1293348, (SIRA INSTITUTE), 18 October 1972, see page 2 lines 110-115 | 4-5 |
| A | A.V. Ostroukhov et al. "Morskaya gidrometria", 1981. Gidrometeoizdat. (Leningrad), see page 413, lines 21-31 | 4-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 10 October 1988 (10.10.88) | 5 November 1988 (05.11.88) |
| International Searching Authority | Signature of Authorized Officer |
| ISA/SU | |

Form PCT/ISA/210 (second sheet) (January 1985)